(19) Europäisches Patentamt

European Patent Office

Office européen des brevets

(11) **EP 3 002 864 A1**

(12) **EUROPEAN PATENT APPLICATION**

(43) Date of publication:
**06.04.2016 Bulletin 2016/14**

(51) Int Cl.:
*H02M 7/217* (2006.01)   *H02M 1/32* (2007.01)
*H02M 1/00* (2006.01)

(21) Application number: **15185615.0**

(22) Date of filing: **17.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **03.10.2014   JP 2014204552**
**11.08.2015   JP 2015158815**

(71) Applicant: **Mitsubishi Electric Corporation**
**Chiyoda-ku**
**Tokyo 100-8310 (JP)**

(72) Inventors:
- **KADOI, Shinsuke**
  **Chiyoda-ku, Tokyo 100-8310 (JP)**
- **YAMASAKI, Hisanori**
  **Chiyoda-ku, Tokyo 100-8310 (JP)**

(74) Representative: **Zech, Stefan Markus**
**Meissner, Bolte & Partner GbR**
**Postfach 86 06 24**
**81633 München (DE)**

(54) **POWER CONVERTER AND CONTROL METHOD**

(57)    A power converter 100 includes N (N is an integer equal to or larger than 2) first power converting units 14 that convert alternating-current power into direct-current power, N short-circuit switches 7, N distributed resistors 16, N primary filter capacitors 20, a power conversion body 12 that converts the direct-current power into direct-current power, and a main switch 6. The power converter further includes a protection device 32 that performs control for setting the primary filter capacitor 20 as a protection target on the basis of abnormality of the primary filter capacitor and turning on the main switch 6 and the short-circuit switch 7 connected to the first power converting unit 14 connected to the primary filter capacitor 20 set as the protection target, or turning off the main switch 6.

FIG.1

**Description**

BACKGROUND OF THE INVENTION

1. Field of the Invention

The present invention relates to a power converter that converts electric power received from an alternating-current power supply into direct-current power and a control method for the power converter.

2. Description of the Related Art

As a driving system for a railroad vehicle that uses a single-phase alternating current as a power supply, an indirect conversion system for converting an alternating current of an alternating-current overhead wire into alternating-current power through a direct current is generally used. The indirect conversion system includes a transformer that steps down a voltage received from the alternating-current overhead wire, a converter that performs conversion between alternating-current power and a direct-current power, and an inverter that outputs an alternating-current voltage having a desired voltage and a desired frequency and variably controls the speed of a motor. As the frequency of the alternating-current overhead wire, a frequency of 16.7 hertz to 60 hertz is widely spread. The transformer in the indirect conversion system is designed according to the frequency. If the voltage in the transformer is fixed, a magnetic flux passing the core of the transformer is larger as an operating frequency is lower. Therefore, when the operating frequency is low, to avoid magnetic saturation in the core of the converter, a large core is necessary and the transformer is increased in size. Among electric components mounted on the railroad vehicle, in particular, the transformer tends to be large.

On the other hand, there has been proposed a driving system that does not require a transformer that operates at the frequency of the voltage of the alternating-current overhead wire. For example, WO 2012/098107 (Patent Literature 1) discloses a driving system that can receive power from the alternating-current overhead wire using a plurality of modularized power conversion cells. Each of the power conversion cells includes a converting unit that converts alternating-current power into direct-current power and an insulated converter that converts direct-current power into direct-current power (hereinafter referred to as DC/DC converter).

Japanese Patent Application Laid-Open No. 2009-159663 (Patent Literature 2) discloses a motor driving apparatus including a plurality of converters connected in parallel. The motor driving apparatus suppresses, when urgently stopping, an overvoltage of filter capacitors in direct-current portions (hereinafter referred to as DC links) that connect the converters and inverters.

In the driving system disclosed in Patent Literature 1, an operating frequency of the insulated DC/DC converter is set to several hundred hertz to several thousand hertz or more. A transformer used in the insulated DC/DC converter can be greatly reduced in size compared with the conventional converter through an increase in the operating frequency. However, the number of DC links increases by the number of power conversion modules compared with the conventional system. Therefore, when an overvoltage suppressing function for the DC links is realized by a method same as the conventional method, the number of discharge circuits increases to cause an increase in the size of the apparatus. However, in Patent Literature 1, suppression of the overvoltage of the filter capacitor in the DC links is not particularly examined.

In Patent Literature 2, filter capacitors that smooth the pulsation of a direct-current voltage are connected to the DC links in parallel. Discharge circuits for suppressing an overvoltage of the filter capacitors are connected to the filter capacitors in parallel. When an overvoltage of the DC links is detected or when an operation failure of semiconductor elements is detected, a protecting operation for short-circuiting the filter capacitors with resistance and quickly discharging electric charges of the filter capacitors is performed. However, a method of discharging, when the motor driving apparatus urgently stops, electric charges of the filter capacitors, which are direct-current charging units, connected to an input unit of the DC/DC converter in parallel is not examined.

The present invention has been devised to solve the problems and it is an object of the present invention to obtain a power converter that converts electric power received from an alternating-current power supply into direct-current power using a plurality of power conversion cells, the power converter including a protection device that can suppress an overvoltage of filter capacitors connected to an input unit of a DC/DC converter in parallel, and a control method for the power converter.

SUMMARY OF THE INVENTION

It is an object of the present invention to at least partially solve the problems in the conventional technology.

In order to solve the aforementioned problems, a power converter according to the present invention is so constructed as to include: N (N is an integer equal to or larger than 2) first power converting units each including first input units to which alternating-current power is input, first output units from which direct-current power is output, and a plurality of semiconductor elements that perform switching, the first power converting unit converting the alternating-current power into the direct-current power; N short-circuit switches connected to the respective first input units in parallel and switch short circuit and open circuit; N distributed resistors connected to the respective first output units in parallel; N primary filter capacitors connected to the respective first output units in parallel; a power conversion body including N power-conversion-body input ends connected to the respective first output units, the direct-current power being input to the power-conversion-body input ends, and a power-conversion-body output end from which the direct-current power is output, the power conversion body converting the direct-current power into direct-current power; and a main switch that switches supply and interruption of electric power, wherein the N first input units are connected in series via the main switch, and the power converter further comprises a protection device that sets the primary filter capacitor as a protection target on the basis of abnormality of the primary filter capacitor or the semiconductor elements and perform control for turning on the main switch and the short-circuit switch connected to the first power converting unit connected to the primary filter capacitor set as the protection target, or turning off the main switch.

Further, a control method according to another aspect of the present invention is a control method in the power converter, in which a protection device performs a protection-target setting step for setting at least one of the primary filter capacitor and the secondary filter capacitor as a protection target on the basis of abnormality of the primary filter capacitor, the secondary filter capacitor, or the semiconductor elements, and when the protection-target setting step is performed, the protection device further performs: a main-switch control step for turning on or off the main switch; and a short-circuit-switch control step for, when turning on the main switch in the main-switch control step, turning on the short-circuit switch connected to the first power converting unit connected to the primary filter capacitor set as the protection target.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

Fig. 1 is a circuit diagram of a power converter according to a first embodiment;
Fig. 2 is a circuit diagram of a first power converting unit according to the first embodiment;
Fig. 3 is a diagram for explaining carrier shift PWM of the first power converting unit according to the first embodiment;
Fig. 4 is a vector diagram for explaining the operation of the first power converting unit according to the first embodiment;
Fig. 5 is a circuit diagram of an example in which a half-bridge circuit is applied to a second power converting unit according to the first embodiment;
Fig. 6 is a circuit diagram of an example in which a full-bridge circuit is applied to the second power converting unit according to the first embodiment;
Fig. 7 is a circuit diagram of an example in which a half-bridge series resonance circuit is applied to the second power converting unit according to the first embodiment;
Fig. 8 is a circuit diagram of another configuration of the power converter according to the first embodiment;
Fig. 9 is an explanatory diagram showing a protecting operation of the power converter according to the first embodiment;
Fig. 10 is a flowchart for explaining the protecting operation of the power converter according to the first embodiment;
Fig. 11 is an explanatory diagram showing a protecting operation of a power converter according to a second embodiment;
Fig. 12 is an explanatory diagram showing operation timing of semiconductor elements of a second power converting unit during electric discharge according to the second embodiment;
Fig. 13 is an explanatory diagram showing a protecting operation of a power converter according to a third embodiment;
Fig. 14 is an explanatory diagram showing a protecting operation of a power converter according to a fourth embodiment;
Fig. 15 is an explanatory diagram showing a protecting operation of a power converter according to a fifth embodiment;
Fig. 16 is a circuit diagram of a power converter according to a sixth embodiment;
Fig. 17 is a circuit diagram of a power converter according to a seventh embodiment;
Fig. 18 is a circuit diagram of an example in which a half-bridge circuit is applied to a second power converting unit according to the seventh embodiment;
Fig. 19 is an explanatory diagram showing a protecting operation of the power converter according to the seventh embodiment;

Fig. 20 is an explanatory diagram showing a protecting operation of a power converter according to an eighth embodiment;

Fig. 21 is an explanatory diagram showing a protecting operation of a power converter according to a ninth embodiment;

Fig. 22 is an explanatory diagram showing a protecting operation of a power converter according to a tenth embodiment;

Fig. 23 is an explanatory diagram showing a protecting operation of a power converter according to an eleventh embodiment;

Fig. 24 is an explanatory diagram showing a protecting operation of a power converter according to a twelfth embodiment; and

Fig. 25 is a flowchart for explaining the protecting operation of the power converter according to the twelfth embodiment.

## DETAILED DESCRIPTION OF THE PREFERRED EMBODIMENTS

Power converters and control methods according to embodiments of the present invention are explained with reference to, as an example, a power converter used in a railroad vehicle. However, a power converter and a control method according to the present invention are not limited to an application to the railroad vehicle and are used in other applications for receiving electric power from an alternating-current power supply.

First Embodiment

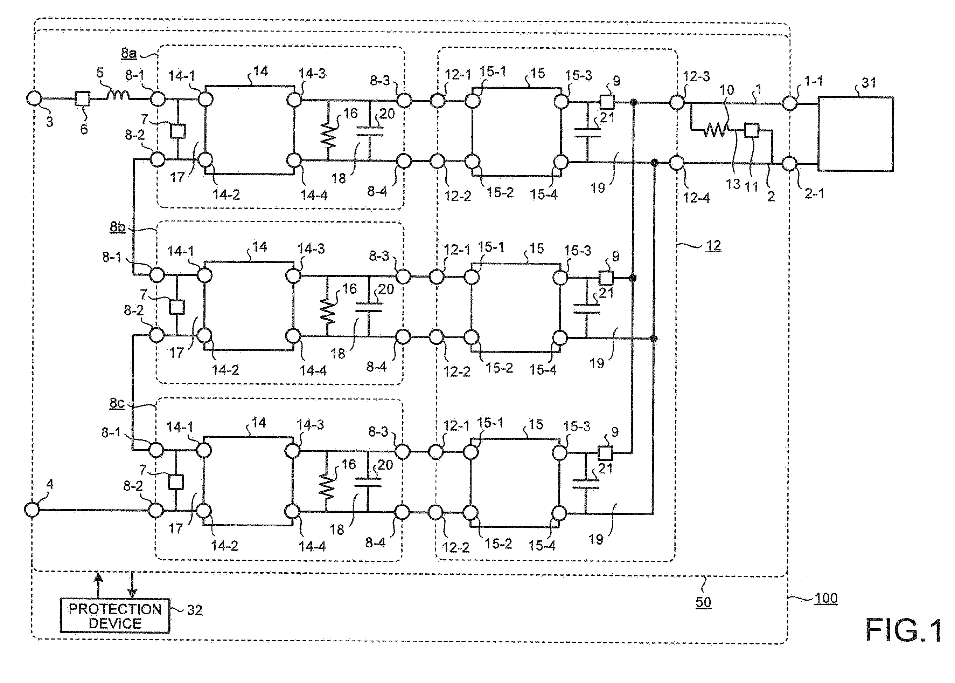

Fig. 1 is a circuit diagram of a power converter according to a first embodiment for carrying out the present invention. A power converter 100 shown in Fig. 1 includes a power conversion circuit 50 and a protection device 32. The power conversion circuit 50 includes a first power conversion cell 8a, a second power conversion cell 8b, and a third power conversion cell 8c, which are three power conversion cells, one power conversion body 12, a main switch 6, an interconnector reactor 5, a power receiving end 3, a ground potential 4, a positive bus end 1-1, a negative bus end 2-1, a lumped resistor 10, and a discharge switch 11. Note that the number of the first, second, and third power conversion cells 8a, 8b, and 8c is not limited to three and it will be sufficient if there are two or more conversion cells. The number is determined according to a voltage of an alternating-current overhead wire, which is a voltage between the power receiving end 3 that receives alternating-current power from a power supply and the ground potential 4 serving as a reference of the potential of the power receiving end 3, and a withstanding voltage of semiconductor elements (not shown in the figure) configuring the first, second, and third power conversion cells 8a, 8b, and 8c.

Each of the first, second, and third power conversion cells 8a, 8b, and 8c includes a first power converting unit 14 that converts alternating-current power into direct-current power (hereinafter referred to as AC/DC conversion), a power-conversion-cell input end including a pair of terminals 8-1 and 8-2, a power-conversion-cell output end including a pair of terminals 8-3 and 8-4, a short-circuit switch 7 that switches short circuit and open circuit between terminals, a distributed resistor 16, and a primary filter capacitor 20.

The first power converting unit 14 includes a first input unit including a pair of terminals 14-1 and 14-2, a first output unit including a pair of terminals 14-3 and 14-4, and a plurality of semiconductor elements (not shown in the figure) that perform switching.

The power conversion body 12 includes three power-conversion-body input ends, each including a pair of terminals 12-1 and 12-2, and one power-conversion-body output end including a pair of terminals 12-3 and 12-4. The power conversion body 12 converts direct-current power input to the pairs of terminals 12-1 and 12-2 of the power-conversion-body input ends into direct-current power output to the pair of terminals 12-3 and 12-4 of the power-conversion-body output end.

Further, the power conversion body 12 includes three second power converting units 15 that convert direct-current power into direct-current power (hereinafter referred to as DC/DC conversion), three secondary filter capacitors 21, and three separation switches 9 that switch short circuit and open circuit between terminals. Note that the number of the pair of terminals 12-1 and 12-2 of the power-conversion-body input end is not limited to three and only has to be the same as the number of power conversion cells. Similarly, the number of the second power converting units 15 is not limited to three and only has to be the same as the number of power conversion cells.

The second power converting unit 15 includes a second input unit including a pair of terminals 15-1 and 15-2, a second output unit including a pair of terminals 15-3 and 15-4, and a plurality of semiconductor elements (not shown in the figure) that perform switching. The second power converting unit 15 converts direct-current power input to the pair of terminals 15-1 and 15-2 of the second input unit into direct-current power output to the pair of terminals 15-3 and 15-4 of the second output unit.

One terminal 8-1 of the power-conversion-cell input end in the first power conversion cell 8a is connected to the receiving terminal 3. The other terminal 8-2 of the power-conversion-cell input end in the third power conversion cell 8c is connected to the ground potential 4. Note that, when there are N (N is an integer equal to or larger than 2) power conversion cells, the one terminal 8-1 of the power-conversion-cell input end in the first power conversion cell 8a is connected to the power receiving end 3. The other terminal 8-2 of the power-conversion-cell input end in an N-th power conversion cell is connected to the ground potential 4.

The other terminal 8-2 of the power-conversion-cell input end in the first power conversion cell 8a is connected to one terminal 8-1 of the power-conversion-cell input end in the second power conversion cell 8b. The other terminal 8-2 of the power-conversion-cell input end in the second power conversion cell 8b is connected to one terminal 8-1 of the power-conversion-cell input end in the third power conversion cell 8c. Note that, when there are N (N is an integer equal to or larger than 2) power conversion cells, the other terminal 8-2 of the power-conversion-cell input end in a K-th (K is an integer of 1 to N-1) power conversion cell is connected to one terminal 8-1 of the power-conversion-cell input end in a K+1-th power conversion cell.

The pairs of terminals 12-1 and 12-2 of the power-conversion-body input ends are connected to the pairs of terminals 8-3 and 8-4 of the power-conversion-cell output ends in the power conversion cell 8a, 8b, and 8c corresponding to the power-conversion-body input ends. That is, the pair of terminals 12-1 and 12-2 of the power-conversion-body input end is connected to only the pair of terminals 8-3 and 8-4 of the power-conversion-cell output end in any one of the power conversion cells 8a, 8b, and 8c. One terminal 12-1 of each of the power-conversion-body input ends and one terminal 8-3 of the power-conversion-cell output ends of the corresponding one of the power conversion cells 8a, 8b, and 8c are connected in the same polarity as a positive pole side of direct-current power. The other terminal 12-2 of each of the power-conversion-body input ends and the other terminal 8-4 of the power-conversion-cell output ends of the corresponding one of the power conversion cells 8a, 8b, and 8c are connected in the same polarity as a negative pole side of the direct-current power.

The terminal 12-3 on the positive pole side of the power-conversion-body output end is connected by a positive bus 1 to the positive bus end 1-1 that outputs a positive pole of direct-current power to a load 31 driven by the direct-current power. The terminal 12-4 on the negative pole side of the power-conversion-body output end is connected by a negative bus 2 to the negative bus end 2-1 that outputs a negative pole of the direct-current power to the load 31. The load 31 is, for example, an inverter that drives a main electric motor and an inverter that supplies electric power to a light, an air conditioner, and the like.

The main switch 6 switches supply and interruption of alternating-current power received from the power receiving end 3. The main switch 6 needs to interrupt a high voltage and a large current. Therefore, the main switch 6 is configured by combining a breaker having a high power interruption function and a disconnector for disconnecting a power line. The main switch 6 is connected between the power receiving end 3 and the one terminal 8-1 of the power-conversion-cell input end in the first power conversion cell 8a. Alternating-current power received by the power receiving end 3 is supplied to the power-conversion-cell input ends 8-1 and 8-2 of the first, second, and third power conversion cells 8a, 8b, and 8c via the main switch 6. Note that the main switch 6 can be connected between the ground potential 4 and the other terminal 8-2 of the input end in the third power conversion cell 8c.

The interconnector reactor 5 is connected between the main switch 6 and one terminal 8-1 of the power-conversion-cell input end of the first power conversion cell 8a. Note that the interconnector reactor 5 can be connected between the ground potential 4 and the other terminal 8-2 of the input end in the third power conversion cell 8c.

Each of the short-circuit switches 7 of the first, second, and third power conversion cells 8a, 8b, and 8c is connected to each of the pair of terminals 8-1 and 8-2 of the power-conversion-cell input end and the pair of terminals 14-1 and 14-2 of the first input unit in the same power conversion cell.

Therefore, the pair of terminals 8-1 and 8-2 of the power-conversion-cell input ends of the first, second, and third power conversion cells 8a, 8b, and 8c are connected to the pair of terminals 14-1 and 14-2 of the first input units in the same power conversion cells.

An AC port 17 indicates, in each of the first, second, and third power conversion cells 8a, 8b, and 8c, a circuit from the pair of terminals 8-1 and 8-2 of the power-conversion-cell input end to the pair of terminals 14-1 and 14-2 of the first input unit.

Each of the distributed resistors 16 of the first, second, and third power conversion cells 8a, 8b, and 8c is connected to each of the pair of terminals 14-3 and 14-4 of the first output unit and the pair of terminals 8-3 and 8-4 of the power-conversion-cell output end in the same power conversion cell.

Each of the primary filter capacitors 20 of the first, second, and third power conversion cells 8a, 8b, and 8c is connected to each of the pair of terminals 14-3 and 14-4 of the first output unit and the pair of terminals 8-3 and 8-4 of the power-conversion-cell output end in the same power conversion cell. Note that the distributed resistor 16 and the primary filter capacitor 20 are not limited to the arrangement shown in Fig. 1. The position of the distributed resistor 16 and the position of the primary filter capacitor 20 can be interchanged in the same power conversion cell.

In each of the first, second, and third power conversion cells 8a, 8b, and 8c, one terminal 14-3 of the first output unit and one terminal 8-3 of the power-conversion-cell output end are connected in the same polarity as a positive pole side of direct-current power. The other terminal 14-4 of the first output unit and the other terminal 8-4 of the power-conversion-cell output end are connected in the same polarity as a negative pole side of direct-current power.

The pair of terminals 15-1 and 15-2 of each of the second input units are connected to the pair of terminals 12-1 and 12-2 of the corresponding one of the power-conversion-body input ends. That is, the pair of terminals 15-1 and 15-2 of each of the second input units are connected only to the pair of terminals 12-1 and 12-2 of any one of the power-conversion-body input ends. One terminal 15-1 of each of the second input units and one terminal 12-1 of the corresponding one of the power-conversion-body input ends are connected in the same polarity as a positive pole side of direct-current power. The other terminal 15-2 of each of the second input units and the other terminal 12-2 of the corresponding one of the power-conversion-body input ends are connected in the same polarity as a negative pole side of the direct-current power.

An internal DC link 18 indicates a circuit from the pair of terminals 14-3 and 14-4 of each of the first output units to the pair of terminals 15-1 and 15-2 of each of the second input units connected to the pair of terminals 12-1 and 12-2 of the power-conversion-body input end corresponding to the pair of the terminals 8-3 and 8-4 of the corresponding one of the power-conversion-cell output ends in the same power conversion cells.

The pair of terminals 15-3 and 15-4 of each of the second output units are connected to the pair of terminals 12-3 and 12-4 of the power-conversion-body output end. The one terminal 15-3 of each of the second output units and one terminal 12-3 of the power-conversion-body output end are connected in the same polarity as a positive pole side of direct-current power. The other terminal 15-4 of the second output unit and the other terminal 12-4 of the power-conversion-body output end are connected in the same polarity as a negative pole side of the direct-current power.

Each of the secondary filter capacitors 21 is connected to each of the pair of terminals 12-3 and 12-4 of the power-conversion-body output end and the pair of terminals 15-3 and 15-4 of the second output units. That is, each of the secondary filter capacitors 21 is connected to the pair of terminals 12-3 and 12-4 of the power-conversion-body output end and connected to only the pair of terminals 15-3 and 15-4 of any one of the second output units.

Each of the separation switches 9 is connected between the one terminal 12-3 of the power-conversion-body output end and the secondary filter capacitors 21. Each of the separation switches 9 is connected between the one terminal 12-3 of the power-conversion-body output end and the one terminal 15-3 of the second output units. That is, each of the separation switches 9 is connected only between the one terminal 12-3 of the power-conversion-body output end and the one terminal 15-3 of any one of the second output unit. Note that the separations switches 9 are not limited to the arrangement shown in Fig. 1. Each of the separation switches 9 can be connected between the other terminal 12-4 of the power-conversion-body output end and the secondary filter capacitors 21. Each of the separation switches 9 can be connected between the other terminal 12-4 of the power-conversion-body output end and the other terminals 15-4 of the second output units. That is, each of the separation switches 9 can be connected only between the other terminal 12-4 of the power-conversion-body output end and the other terminal 15-4 of any one of the second output units.

The separation switches 9 have a function of separating, when a failure of semiconductor element occurs, the second power converting unit 15 including the semiconductor element from the positive bus 1 or the negative bus 2.

The discharge switch 11 switches short circuit and open circuit between terminals. A series connection body 13, to which the lumped resistor 10 and the discharge switch 11 are connected in series to each other, is connected to each of the positive bus end 1-1 and the negative bus end 2-1 and the pair of terminals 12-3 and 12-4 of the power-conversion-body output end.

A DC port 19 indicates a circuit from the pair of terminals 15-3 and 15-4 of each of the second output units to the pair of terminals 12-3 and 12-4 of the power-conversion-body output end.

As explained above, the power converter 100 includes N (N is an integer equal to or larger than 2) first power converting units 14, N short-circuit switches 7, N distributed resistors 16, N primary filter capacitors 20, a power conversion body 12, and a main switch 6. Each of the first power converting units 14 includes a pair of terminals 14-1 and 14-2 of the first input unit to which alternating-current power is input, a pair of terminals 14-3 and 14-4 of the first output unit from which direct-current power is output, and a plurality of semiconductor elements that perform switching. Each of the first power converting units 14 converts the alternating-current power into direct-current power. Each of the short-circuit switches 7 is connected to the pair of terminals 14-1 and 14-2 of the first input unit in parallel and switch short circuit and open circuit. Each of the distributed resistors 16 is connected to the pair of terminals 14-3 and 14-4 of the first output unit in parallel. Each of the primary filter capacitors 20 is connected to the pair of terminals 14-3 and 14-4 of the first output units in parallel. The power conversion body 12 includes a pair of terminals 12-1 and 12-2 of each of the N power-conversion-body input ends and a pair of terminals 12-3 and 12-4 of the power-conversion-body output end and converts the direct-current power into direct-current power. Each of the pairs of terminals 12-1 and 12-2 of each of the power-conversion-body input ends are connected to the pair of terminals 14-3 and 14-4 of the corresponding first output units. Direct-current power is input to the pairs of terminals 12-1 and 12-2 of the power-conversion-body input ends. The direct-current power is output from the pair of terminals 12-3 and 12-4 of the power-conversion-body output end. The main switch 6 switches supply and interruption of electric power. The pair of terminals 14-1 and 14-2 of each of the N first input units are connected in series via the main switch 6.

The power converter 100 further includes a lumped resistor 10 and a discharge switch 11 that switches short circuit and open circuit. The power conversion body 12 further includes N separation switches 9, N second power converting units 15, and N secondary filter capacitors 21. Each of the separation switches 9 switches short circuit and open circuit. Each of the second power converting units 15 includes a pair of terminals 15-1 and 15-2 of the second input unit connected to the pair of terminals 12-1 and 12-2 of the power-conversion-body input ends corresponding thereto, the pair of terminals 15-3 and 15-4 of the second output unit connected to the pair of terminals 12-3 and 12-4 of the power-conversion-body output end via the separation switches 9, and the plurality of semiconductor elements that perform switching. Each of the second power converting units 15 converts the direct-current power into direct-current power. Direct-current is input to the pair of terminals 15-1 and 15-2 of the second input unit. Each of the direct-current power is output from the pair of terminals 15-3 and 15-4 of the second output units Each of the secondary filter capacitors 21 is connected to the pair of terminals 15-3 and 15-4 of the second output units in parallel. The series connection body 13, to which the lumped resistor 10 and the discharge switch are connected in series to each other, is connected to the pair of terminals 12-3 and 12-4 of the power-conversion-body output end in parallel.

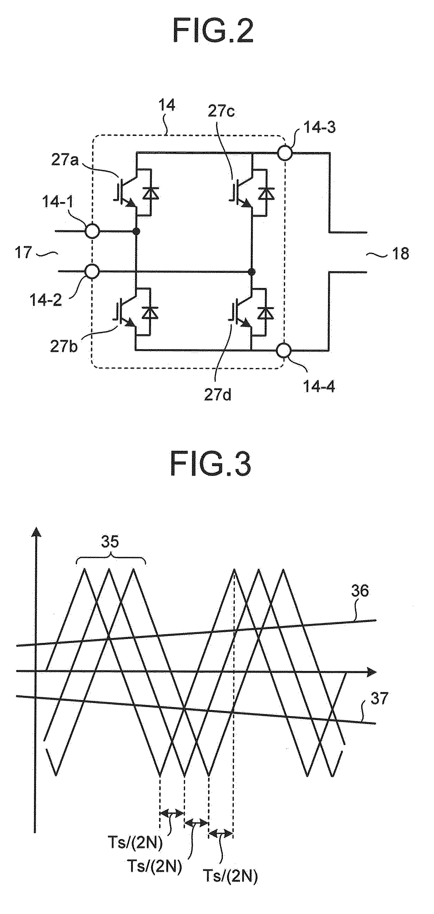

The configuration and the operation of the first power converting unit 14 are explained. Fig. 2 is a circuit diagram of the first power converting unit according to this embodiment. In Fig. 2, the first power converting unit 14 in any one of the first, second, and third power conversion cells 8a, 8b, and 8c includes a bridge circuit including four semiconductor elements 27a, 27b, 27c, and 27d such as MOS-FETs. In the first power converting unit 14, the semiconductor elements 27a and 27b are connected in series, the semiconductor elements 27c and 27d are connected in series, and these two sets of semiconductor elements are connected in parallel. The power converting unit 14 rectifies alternating-current power according to switching of the semiconductor elements 27a to 27d and converts the alternating-current power into direct-current power. Therefore, the first power converting unit 14 operates as a converter that performs AC/DC conversion.

Fig. 3 is a diagram for explaining carrier shift PWM of the first power converting unit according to this embodiment. The abscissa of Fig. 3 represents time. The ordinate of Fig. 3 represents a level of a signal. The carrier shift PWM, which is PWM control of a triangular-wave comparison system, shown in Fig. 3 is an example of a method of determining timing of switching of the semiconductor elements 27a to 27d of the first power converting unit 14. In Fig. 3, a positive-phase signal wave 36 and a negative-phase signal wave 37 are calculated on the basis of an alternating-current voltage that should be generated in the AC port 17. The negative-phase signal wave 37 is a signal wave obtained by reversing the phase of the positive-phase signal wave 36. ON and OFF states of each of the semiconductor elements 27a and 27b are controlled on the basis of a magnitude relation between the positive-phase signal wave 36 and a carrier wave 35. ON and OFF states of each of the semiconductor elements 27c and 27d are controlled on the basis of a magnitude relation between the negative-phase signal wave 37 and the carrier wave 35.

The semiconductor elements 27a and 27b are complementarily subjected to ON/OFF control. That is, when the semiconductor element 27a is on, the semiconductor element 27b is off. When the semiconductor element 27a is off, the semiconductor element 27b is on. Similarly, the semiconductor elements 27c and 27d are also complementarily subjected to ON/OFF control. However, to prevent short circuit of the internal DC link 18, a dead time period is set in advance in which an ON signal is not given to all of the upper and lower semiconductor elements 27a and 27b or 27c and 27d. A control method for the converter, i.e., the first power converting unit 14 is generally called unipolar PWM modulation.

An alternating-current voltage that should be output to the AC ports 17 is calculated as explained below. All the AC ports 17 and the interconnector reactor 5 are connected in series between the power receiving end 3 and the ground potential 4. Therefore, the following relational expression holds between an overhead wire voltage Vs and a voltage Vi output to an i-th (i=1 to n, n is an integer equal to or larger than 2) AC port 17 and a voltage VL across the interconnector reactor 5:

$$\dot{V}_S = \sum \dot{V}_i + \dot{V}_L \qquad (1)$$

In the expression, dots indicate that variables are vector amounts. Further, when an imaginary number unit is represented as j, an impedance of the interconnector reactor 5 is represented as X, and an overhead wire current is represented as Is, Expression (1) is modified like the following expression:

$$\dot{V}_S = \sum \dot{V}_i + jX\dot{I}_S \qquad (2)$$

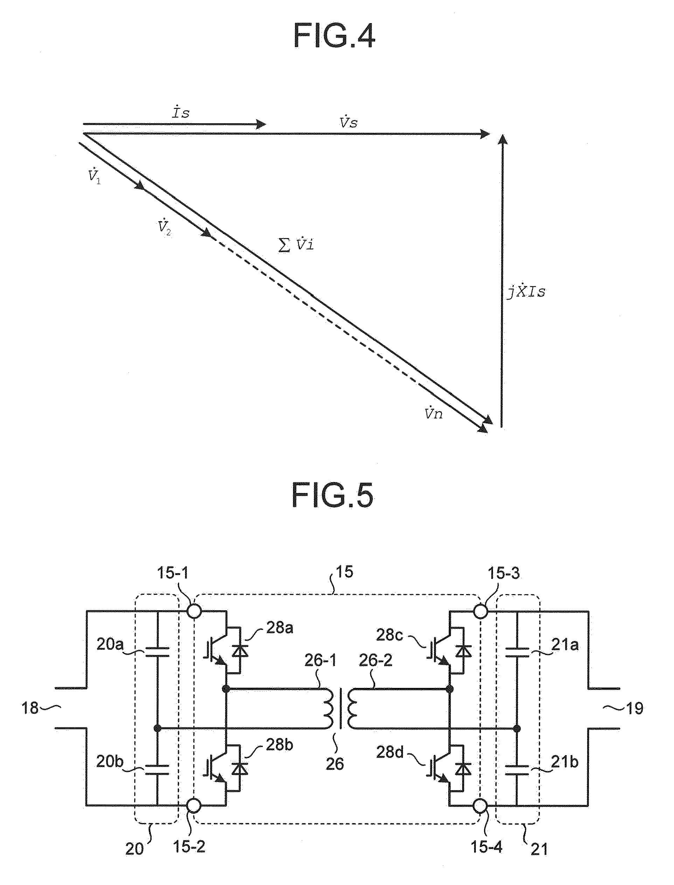

Fig. 4 is a vector diagram for explaining the operation of the first power converting unit according to this embodiment. In the power converter 100 of the railroad vehicle, in general, the converter is controlled so as to set a power factor of a power supply to 1. That is, the first power converting unit 14 is controlled such that the overhead wire voltage Vs and the overhead wire current Is are set to be the same phase.

The relation of Expression (2) can be represented by the vector diagram of Fig. 4. Therefore, when the magnitude of the overhead wire current Is is controlled so as to fix the voltage of the internal DC links 18, a sum of voltages V1 to Vn, which should be output to the AC ports 17, is uniquely set.

Incidentally, when the first power converting unit 14 is subjected to the unipolar PWM modulation and a power factor of an overhead wire is controlled as to be 1, fundamental wave amplitude of the voltages of the AC port 17 is smaller than the voltage of the internal DC link 13. A rated voltage of the internal DC links 18 is restricted by a withstanding voltage of the semiconductor elements configuring the first power converting units 14 and the second power converting units 15. Consequently, in general, the rated voltage of the internal DC links 18 is set to approximately a half value of the withstanding voltage of the semiconductor elements.

Further, in the vector diagram of Fig. 4, it is seen that a sum of the voltages of the AC ports 17 needs to be set larger than the overhead wire voltage Vs. Therefore, when the rated voltage of the internal DC links 18 is represented as $E_m$, a withstanding voltage of the semiconductor elements 27a to 27d is represented as $V_{CES}$, and the number of power conversion cells is represented as N, there is a restriction indicated by the following expression:

$$N > \frac{2\,|\,\dot{V}_s\,|}{V_{CES}} = \frac{|\,\dot{V}_s\,|}{E_m} \qquad (3)$$

Expression (3) indicates that, as the overhead wire voltage Vs is larger and the withstanding voltage $V_{CES}$ of the semiconductor elements is smaller, the number N of necessary power conversion cells is larger. Taking into account an upper limit of a WPM modulation degree and continuous operation performed when a part of the power conversion cells stops, an actual value of N is a value obtained by adding 2 to 3 to a value calculated by Expression (3).

When a switching cycle of each of the semiconductor elements 27a to 27d of the first power converting unit 14 is represented as Ts, the carrier waves 35 of the first power converting units 14 are calculated while being temporally shifted by Ts/2N one by one. Consequently, harmonics of the overhead current Is are greatly reduced.

The configuration and the operation of the second power converting unit 15 are explained. Fig. 5 is a circuit diagram of an example in which a half-bridge circuit is applied to the second power converting unit according to this embodiment. In Fig. 5, each of the second power converting units 15 in the power conversion body 12 includes a bridge circuit including four semiconductor elements 28a to 28d such as MOS-FETs and an insulating transformer 26. In the second power converting unit 15, the semiconductor elements 28a and 28b are connected in series, the primary filter capacitors 20a and 20b are connected in series, and the one pair of semiconductor elements and the pair of primary filter capacitors 20 are connected in parallel. The semiconductor elements 28c and 28d are connected in series, the secondary filter capacitors 21a and 21b are connected in series, and the one pair of semiconductor elements and the one pair of secondary filter capacitors 21 are connected in parallel. The primary filter capacitors 20a and 20b and the secondary filter capacitors 21a and 21b have a function of smoothing pulsation of a direct-current voltage.

Direct-current power supplied from the internal DC link 18 is supplied from between the semiconductor elements 28a and 28b to a primary side 26-1 of the insulating transformer 26 and supplied from between the primary filter capacitors 20a and 20b to the primary side 26-1 as alternating-current power. The alternating-current power supplied from the primary side 26-1 to a secondary side 26-2 of the insulating transformer 26 is supplied from the secondary side 26-2 to between the semiconductor elements 28c and 28d and from the secondary side 26-2 to between the secondary filter capacitors 21a and 21b and supplied to the DC port 19. The direct-current power is converted into direct-current power according to switching of the semiconductor elements 28a to 28d.

Contrary to the above, the second power converting unit 15 can also supply the direct-current power from the DC port 19 to the internal DC link 18. Therefore, the second power converting unit 15 can transmit the direct-current power in both the directions. The primary side 26-1 and the secondary side 26-2 are electrically insulated by the insulating transformers 26. That is, the second power converting unit 15 is a so-called bidirectional insulating DC/DC converter.

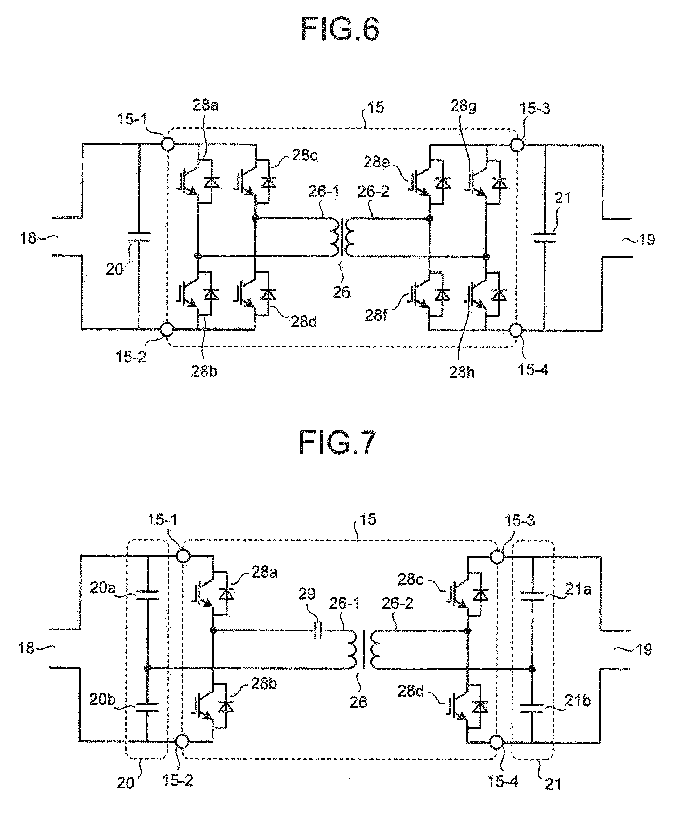

Fig. 6 is a circuit diagram of an example in which a full-bridge circuit is applied to the second power converting unit according to this embodiment. As shown in Fig. 6, the second power converting unit 15 can be a full-bridge circuit. In Fig. 6, each of the second power converting units 15 in the power conversion body 12 includes a bridge circuit including eight semiconductor elements 28a to 28h such as MOS-FETs and the insulating transformer 26. In the second power converting unit 15, the semiconductor elements 28a and 28b are connected in series, the semiconductor elements 28c and 28d are connected in series, and the two sets of semiconductor elements are connected in parallel. The semiconductor elements 28e and 28f are connected in series, the semiconductor elements 28g and 28h are connected in series, and the two sets of semiconductor elements are connected in parallel. Functions of the primary filter capacitors 20a and 20b and the secondary filter capacitors 21a and 21b are the same as the functions shown in Fig. 5.

Direct-current power supplied from the internal DC link 18 is supplied from between the semiconductor elements 28a and 28b to the primary side 26-1 of the insulating transformer 26, and from between the semiconductor elements 28c and 28d to the primary side 26-1 as alternating-current power. The alternating-current power supplied from the primary side 26-1 to the secondary side 26-2 of the insulating transformer 26 is supplied from the secondary side 26-2 to between the semiconductor elements 28e and 28f and from the secondary side 26-2 to between the semiconductor elements 28g and 28h and supplied to the DC port 19. The direct-current power is converted into direct-current power according to switching of the semiconductor elements 28a to 28h.

Contrary to the above, the second power converting unit 15 can also transmit the direct-current power from the DC port 19 to the internal DC link 18. Therefore, the second power converting unit 15 can transmit the direct-current power in both the directions. The primary side 26-1 and the secondary side 26-2 are electrically insulated by the insulating transformers 26. That is, the second power converting unit 15 is a so-called bidirectional insulating DC/DC converter.

Fig. 7 is a circuit diagram of an example in which a half-bridge series resonance circuit is applied to the second power converting unit 15 according to this embodiment. As shown in Fig. 7, the second power converting unit 15 can be a so-called resonance converter. The circuit configuration of the second power converting unit 15 shown in Fig. 7 is different from the circuit configuration of the second power converting unit 15 shown in Fig. 5 in that the series resonance capacitor 29 is connected between the semiconductor elements 28a and 28b and the primary side 26-1 of the insulating transformer 26. Functions of the primary filter capacitors 20a and 20b and the secondary filter capacitors 21a and 21b are the same as the functions shown in Fig. 5.

Therefore, the second power converting unit 15 can transmit the direct-current power in both the directions. The primary side 26-1 and the secondary side 26-2 are electrically insulated by the insulating transformers 26. That is, the second power converting unit 15 is a so-called bidirectional insulating DC/DC converter.

Note that the second power converting unit 15 is not limited to the three circuit configurations explained above. The second power converting unit 15 only has to be able to transmit the direct-current power in both the directions and the primary side 26-1 and the secondary side 26-2 only have to be electrically insulated by the insulating transformer 26.

The insulating transformer 26 of the second power converting unit 15 operates at a high frequency equal to or higher than several hundred hertz. When the voltage in the insulating transformer 26 is fixed, a magnetic flux passing the core of the insulating transformer 26 becomes smaller as the operating frequency becomes larger. Therefore, allowable magnetic flux density is determined by the material of the core. When compared at the same magnetic flux density, the sectional area of the core can be reduced. Therefore, the core of the insulating transformer 26 can be reduced in size. Consequently, compared with the transformer of the conventional system that operates at the frequency of the overhead wire voltage, the insulating transformer 26 is greatly reduced in size and weight.

The second power converting unit 15 adjusts a transmission amount of electric power according to fluctuation in electric power necessary for the load 31. The voltage between the positive bus 1 and the negative bus 2, that is, the voltage of the secondary filter capacitor 21 is controlled so as to be fixed. In particular, when the second power converting unit 15 is a half-bridge configuration that requires an intermediate point of the secondary filter capacitors 21a and 21b shown in Figs. 5 and 7, if the semiconductor elements 28c and 28d adjacent to the secondary filter capacitors 21a and 21b cause a short-circuit failure, the voltage of the DC port 19 is applied to either one of the secondary filter capacitors 21a and 21b divided into two. Therefore, in order to secure redundancy for enabling continuation of operation with intact power conversion cells even when a failure occurs while designing the withstanding voltage of the secondary filter capacitors 21a and 21b as small as possible, it is desirable to disconnect the second power converting unit 15 from the positive bus 1 or the negative bus 2 by actuating the separation switch 9 according to necessity even during the operation of the power converter 100. In the power converter 100, because the second power converting units 15 are connected in parallel to each other, the second power converting units 15 can operate independently from the others.

In Figs. 5 and 7, when the primary filter capacitors 20a and 20b and the secondary filter capacitors 21a and 21b discharge electric charges, both of the primary filter capacitors 20a and 20b and both of the secondary filter capacitors 21a and 21b are discharged. Therefore, in the following explanation, the primary filter capacitors 20a and 20b are treated as one primary filter capacitor 20 and the secondary filter capacitors 21a and 21b are treated as one secondary filter capacitor 21.

Functions of the protection device 32, the lumped resistor 10, the distributed resistors 16, and the discharge switch 11 are explained. The lumped resistor 10, the distributed resistors 16, and the discharge switch 11 are devices for suppressing an overvoltage of the primary filter capacitors 20 and the secondary filter capacitors 21.

The protection device 32 performs, on the basis of the positions of the primary filter capacitor 20 and the secondary filter capacitor 21 set as protection targets on the power conversion circuit 50, control for switching ON and OFF of the main switch 6, the short-circuit switches 7, the separation switches 9, the discharge switch 11, the semiconductor elements of the first power converting units 14, and the semiconductor elements of the second power converting units 15.

When a system including the power converter 100 is urgently stopped, when the semiconductor elements fail, or when a failure of the apparatus such as earth fault, short circuit, or mixed touch occurs, it is likely that an overvoltage occurs at least in one of the primary filter capacitor 20 and the secondary filter capacitor 21. It is likely that a range of failures expands when electric charges in the primary filter capacitor 20 and the secondary filter capacitor 21 are discharged through an unexpected route. Therefore, the protection device 32 has a function of, in the state explained above, setting at least one of the primary filter capacitor 20 and the secondary filter capacitor 21 as a protection target, cutting a charging route for the primary filter capacitor 20 or the secondary filter capacitor 21 set as the protection target, consuming the electric charges with resistance, suppressing an overvoltage of the primary filter capacitor 20 and the secondary filter capacitor 21, and preventing the range of failures from expanding.

From the viewpoint of overvoltage suppression, the resistance for discharging the electric charges of the secondary filter capacitor 21 set as the protection target, that is, a resistance value of the lumped resistor 10 is desirably as small as possible. A time constant of a series circuit including the lumped resistor 10 and the secondary filter capacitor 21 is represented by a product of the resistance value of the lumped resistor 10 and the capacitance of the secondary filter capacitor 21. Therefore, the time constant is smaller as the resistance value of the lumped resistor 10 is smaller. The electric charge of the primary filter capacitor 21 is quickly discharged. However, as discharge speed of the secondary filter capacitor 21 is higher, electric power instantaneously consumed by the lumped resistor 10 increases. Therefore, a temperature rise of the lumped resistor 10 increases. The lumped resistor 10 is increased in size to withstand heat generation.

When the overvoltage suppression is unnecessary, the lumped resistor 10 is desirably disconnected from the circuit of the power converter 100. When the entire power converter 100 is normally operating, the power converter 100 is controlled to fix the voltages of the secondary filter capacitors 21. However, when the lumped resistor 10 is always connected to the secondary filter capacitors 21, a power loss inversely proportional to the resistance value of the lumped resistor 10 and proportional to a square of a voltage applied to the lumped resistor 10 occurs.

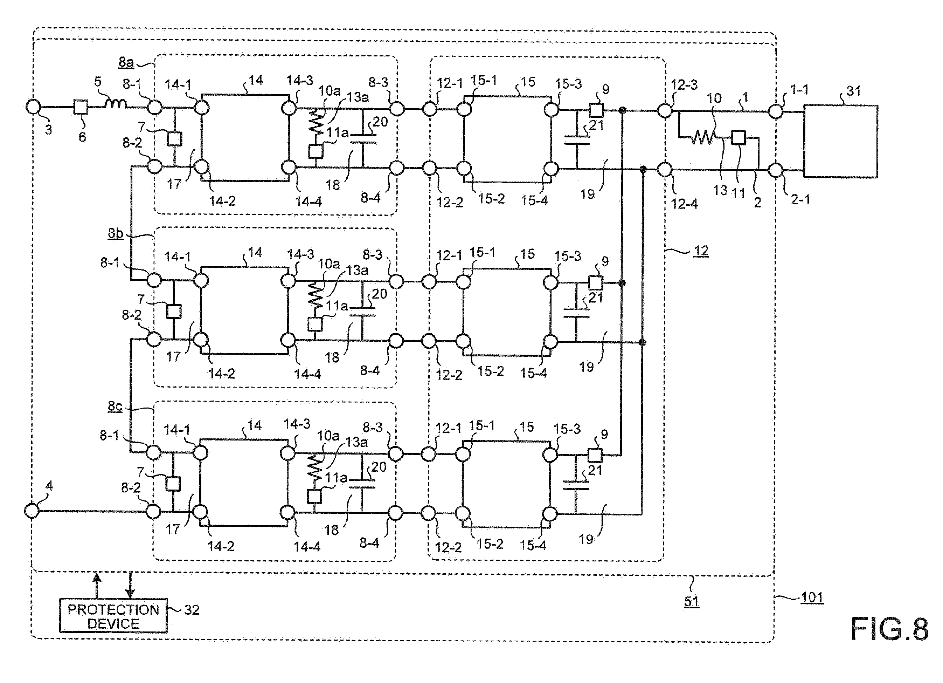

Fig. 8 is a circuit diagram of another configuration of the power converter according to this embodiment. The circuit configuration of a power conversion circuit 51 shown in Fig. 8 is different in that, in each of the first, second, and third power conversion cells 8a, 8b, and 8c, instead of the distributed resistor 16 of the circuit configuration of the power converter 100 shown in Fig. 1, a series connection body 13a, in which a lumped resistor 10a and a discharge switch 11a are connected in series, is connected to each of the pair of first terminals 14-3 and 14-4 of the first output unit and the pair of terminals 8-3 and 8-4 of the power-conversion-cell output end. In Fig. 8, compared with the conventional system, the number of the primary filter capacitors 20, which are independent direct-current charging units, is larger by the number of the first, second, and third power conversion cells 8a, 8b, and 8c. The lumped resistors 10a that can attain sufficiently high-speed electric discharge of the primary filter capacitors 20 and the discharge switches 11a for disconnecting the lumped resistors 10a during normal operation need to be provided in all of the primary filter capacitors 20. Therefore, a power converter 101 is increased in size.

The power converter 100 shown in Fig. 1 includes, between the positive bus 1 and the negative bus 2, the lumped resistor 10 having a sufficiently small resistance value and includes, in the internal DC links 18, the distributed resistors 16 having resistance values larger than the resistance value of the lumped resistor 10. Specifically, a time constant calculated from a total of the capacitances of all the secondary filter capacitors 21 and the resistance value of the lumped resistor 10 is determined to be smaller than one second. On the other hand, in the power conversion cells, a time constant calculated from the capacitances of the primary filter capacitors 20 and the resistance values of the distributed resistors 16 can be one minute or more. If the resistance values of the distributed resistors 16 are sufficiently large, even if a voltage is always applied to the distributed resistors 16, a loss of the distributed resistors 16 is negligible compared with a loss of the entire power converter 100. Therefore, the discharge switches 11a shown in Fig. 8 are unnecessary. The power converter 100 can be reduced in size.

Note that, when the power converter 100 is normally operating, the main switch 6 is on, all the short-circuit switches 7 are off, all the separation switches 9 are on, and the discharge switch 11 is off.

Therefore, when the entire power converter 100 is normally operating, an electric current does not flow to the discharge switch 11 and a loss does not occur. Therefore, a semiconductor element such as a thyristor having high switching speed is suitable for the discharge switch 11.

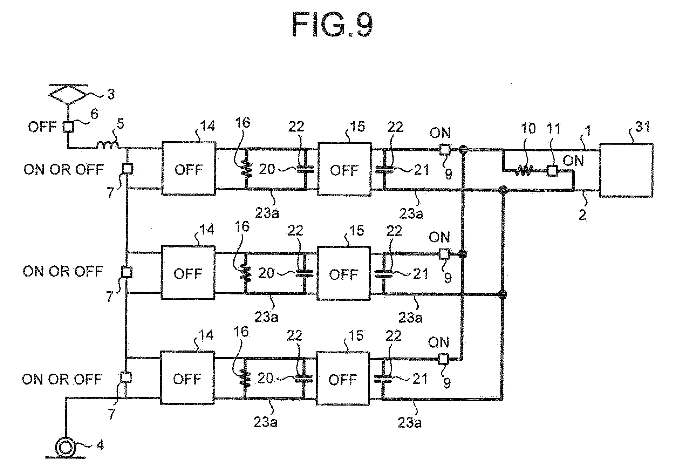

The operation of the protection device 32 is explained. Fig. 9 is an explanatory diagram showing a protecting operation of the power converter 100 according to this embodiment. In Fig. 9, discharge routes 23a of the primary filter capacitors 20 and the secondary filter capacitors 21 controlled by the protection device 32 are indicated by thick lines. Characters ON and OFF in the main switch 6, the short-circuit switches 7, the separation switches 9, the discharge switch 11, the semiconductor elements 27a to 27d of the first power converting units 14, and the semiconductor elements 28a to 28h of the second power converting units 15 respectively represent states of ON and OFF thereof. In Fig. 9, the primary filter capacitor 20 set as a protection target in the first power conversion cell 8a and the secondary filter capacitors 21 respectively connected to the second power converting units 15, which are respectively connected to the first, second, and third power conversion cells 8a, 8b, and 8c, and set as protection targets are represented as protection targets 22.

When an overvoltage occurs in the primary filter capacitor 20 and the secondary filter capacitor 21, the protection device 32 in this embodiment sets, as the protection targets 22, the primary filter capacitor 20 and the secondary filter capacitor 21 in which the overvoltage has occurred. Specifically, the protection device 32 monitors voltage values of the primary filter capacitor 20 and the secondary filter capacitor 21 detected by voltage sensors (not shown in the figure) that respectively detect the voltages of the primary filter capacitor 20 and the secondary filter capacitor 21. When the voltage values of the primary filter capacitor 20 and the secondary filter capacitor 21 exceed a value set in advance, the protection device 32 determines the states of the primary filter capacitor 20 and the secondary filter capacitor 21 as abnormal and sets the primary filter capacitor 20 and the secondary filter capacitor 21 as the protection targets 22 on the basis of the abnormality of the primary filter capacitor 20 and the secondary filter capacitor 21. Then, the protection device 32 performs control for turning off all of the semiconductor elements 27a to 27d and the semiconductor elements 28a to 28h, turning on the discharge switch 11, and turning off the main switch 6. The protection device 32 performs control for turning on or off all the short-circuit switches 7 and turning on all the separation switches 9 to keep the states of ON or OFF of the respective switches. When the main switch 6 is off, the short-circuit switches 7 can be on or can be off. However, when the number of operations of the switches increases, it is likely that the frequency of maintenance increases and the life of the switches decreases. Therefore, the short-circuit switches 7 desirably keep the immediately preceding state. As a result, as in the discharge routes 23a shown in Fig. 9, electric charges of all the secondary filter capacitors 21 are quickly consumed by the lumped resistor 10 connected in parallel to the secondary filter capacitors 21. Electric charges of all the primary filter capacitors 20 are gently consumed by the distributed resistors 16 connected in parallel to the primary filter capacitors 20.

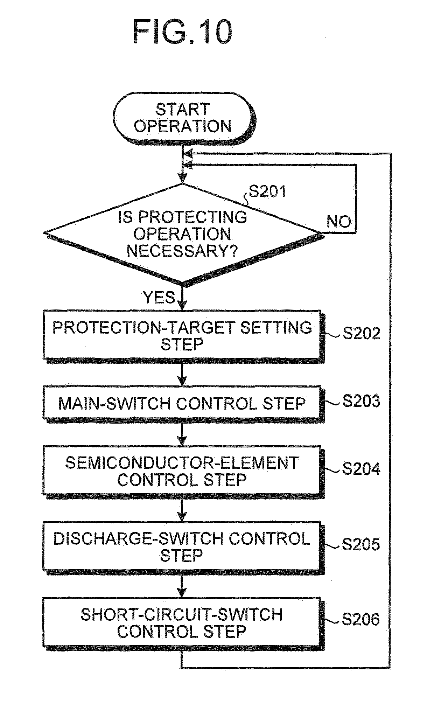

Fig. 10 is a flowchart for explaining the protecting operation of the power converter according to this embodiment. In Fig. 10, first, the operation of the power converter 10 according to this embodiment is started. Thereafter, at step S201, the protection device 32 always monitors whether the protecting operation of the power converter 100 is necessary. When the protecting operation is necessary (Yes), the protection device 32 proceeds to a protection-target setting step S202. Note that, when the protecting operation is unnecessary (No), the protection device 32 repeats step S201. When an overvoltage occurs in the primary filter capacitor 20 and the secondary filter capacitor 21, the protection device 32 of the power converter 100 performs the protection-target setting step S202 and sets, as the protection targets 22, the primary filter capacitor 20 and the secondary filter capacitor 21 in which the overvoltage has occurred. Subsequently, the protection device 32 performs a main-switch control step S203 and turns off the main switch 6. Subsequently, the protection device 32 performs a semiconductor-element control step S204 and turns off all of the semiconductor elements 27a to 27d and the semiconductor elements 28a to 28h. Subsequently, the protection device 32 performs a discharge-switch control step S205 and turns on the discharge switch 11. Finally, the protection device 32 performs a short-circuit-switch control step S206 and keeps the states of ON or OFF of all the short-circuit switches 7. Thereafter, the protection device 32 returns to step S201 and shifts to a state for monitoring whether the protecting operation of the power converter 100 is necessary.

In order to cut a current route from the power receiving terminal 3, the main-switch control step S203 is most preferentially performed. In general, compared with a mechanical switch, time required for switching of ON and OFF states is short in the semiconductor elements. Therefore, the semiconductor-element control step S204 is performed second most preferentially. Further, since there is an effect of immediately reducing the voltage of the protection targets 22 by turning on the discharge switch 11, the discharge-switch control step S205 is third most preferentially performed. Therefore, by performing the protecting operation of the power converter 100 according to the flow explained above, the protection device 32 can more quickly suppress an overvoltage of the primary filter capacitor 20 and the secondary filter capacitor 21 set as the protection targets 22.

Note that the protection device 32 can simultaneously perform the main-switch control step S203, the semiconductor-element control step S204, and the discharge-switch control step S205. Taking into account time required for switching ON and OFF of the main switch 6, the discharge switch 11, and the short-circuit switches 7, the order of performing the main-switch control step S203, the semiconductor-element control step S204, the discharge-switch control step S205, and the short-circuit-switch control step S206 is not limited to the order shown in Fig. 10 and can be changed. When the states of ON and OFF before the start of the protecting operation can be kept even during the protecting operation, the short-circuit-switch control step S206 does not have to be performed.

Note that, during the protecting operation, the ON state of the separation switches 9 is kept as it is.

When the power converter 100 is normally operating, a sum of the voltages of the primary filter capacitors 20 is larger than a peak value of the overhead wire voltage. Therefore, if abnormality does not occur in the circuit, simply by turning off all of the semiconductor elements 27a to 27d and the semiconductor elements 28a to 28h, it is possible to suppress the primary filter capacitors 20 from being charged. However, because the primary filter capacitors 20 are not electrically insulated from the power receiving end 3, when a failure of the circuit due to short circuit or earth fault occurs, it is likely that the primary filter capacitors 20 are unexpectedly charged. Therefore, when an overvoltage occurs in the primary filter capacitor 20 and the primary filter capacitor 20 is set as the protection target 22, the protection device 32 performs control for turning off the main switch 6. Further, the protection device 32 turns off all of the semiconductor elements 27a to 27d and the semiconductor elements 28a to 28h. Note that, if the main switch 6 is off, the short-circuit switches 7 can be turned on or can be turned off.

When an overvoltage occurs in the secondary filter capacitors 21, in order to prevent a situation in which electric power regenerated from the load 31 is accumulated and the voltage of the secondary filter capacitors 21 further rises, electric charges of the secondary filter capacitors 21 set as the protection targets 22 need to be quickly discharged. Therefore, when the overvoltage occurs in the secondary filter capacitors 21 and the secondary filter capacitors 21 are set as the protection targets 22, the protection device 32 performs control for turning on the discharge switch 11 and all the separation switches 9. Note that, if the discharge switch 11 and all the separation switches 9 are turned on, it is possible to consume electric charges of all the secondary filter capacitors 21 set as the protection targets 22 in the lumped resistor 10.

When an overvoltage occurs in the primary filter capacitor 20 and the primary filter capacitor 20 is set as the protection target 22 according to the control by the protection device 32 explained above, it is possible to cut a current route to the internal DC link 18 by performing control for turning off the main switch 6. Further, it is possible to cause the distributed resistor 16 to consume electric charges of the primary filter capacitor 20. Therefore, it is possible to suppress an overvoltage of the primary filter capacitor 20 set as the protection target 22. Therefore, in the power converter 100 that converts electric power from an alternating-current power supply including a plurality of power conversion cells into direct-current power, it is possible to suppress an overvoltage of the primary filter capacitors 20 connected in parallel to the pairs of terminals 15-1 and 15-2 of the second input units of the second power converting units 15, which are the DC/DC converters.

When an overvoltage occurs in the secondary filter capacitors 21 and the secondary filter capacitors 21 are set as the protection targets 22, by performing control for turning on the discharge switch 11 and all the separation switches 9, the protection device 32 can cause the lumped resistor 10 to consume electric charges of all the secondary filter capacitors 21 set as the protection targets 22. Therefore, it is possible to suppress an overvoltage of all the secondary filter capacitors 21 set as the protection targets 22.

Therefore, when an overvoltage occurs in at least one of the primary filter capacitor 20 and the secondary filter capacitor 21 and at least one of the primary filter capacitor 20 and the secondary filter capacitor 21 is set as the protection target 22, the protection device 32 turns off the main switch 6, the semiconductor elements 27a to 27d of all the first power converting units 14, and the semiconductor elements 28a to 28h of all the second power converting units 15. The protection device 32 performs control for turning on the discharge switch 11 and all the separation switches 9. According to these kinds of control, it is possible to cause the distributed resistor 16 to consume electric charges of the primary filter capacitor 20 and cause the lumped resistor 10 to consume electric charges of the secondary filter capacitor 21. Therefore, it is possible to suppress an overvoltage of at least one of the primary filter capacitor 20 and the secondary filter capacitor 21 set as the protection target 22.

Note that, when the switching of ON and OFF of the semiconductor elements 27a to 27d and the semiconductor elements 28a to 28h becomes uncontrollable, the protection device 32 can turn off the semiconductor elements 27a to 27d of the first power converting units 14 excluding the semiconductor elements 27a to 27d, the switching of ON and OFF of which has become uncontrollable, and turn off the semiconductor elements 28a to 28h of the second power converting units 15 excluding the semiconductor elements 28a to 28h, the switching of ON and OFF of which has become uncontrollable. According to these operations, it is possible to attain effects same as the effects explained above.

Second Embodiment

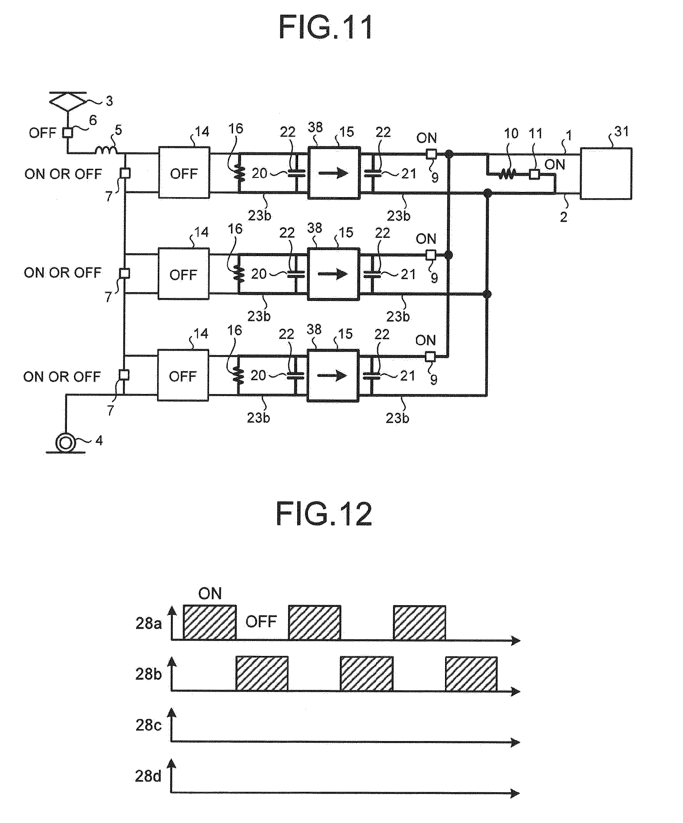

Fig. 11 is an explanatory diagram showing a protecting operation of a power converter according to a second embodiment for carrying out the present invention. The power converter 100 according to this embodiment is different from the first embodiment in the points explained below. In Fig. 11, discharge routes 23b of the primary filter capacitors 20 and that of the secondary filter capacitors 21 controlled by the protection device 32 are indicated by thick lines. Characters ON and OFF in the main switch 6, the short-circuit switches 7, the separation switches 9, the discharge switch 11, the semiconductor elements 27a to 27d of the first power converting units 14, and the semiconductor elements 28a to 28h of the second power converting units 15 respectively represent states of ON and OFF thereof. In Fig. 11, the primary filter capacitor 20 set as a protection target in the first power conversion cell 8a, and the secondary filter capacitors 21 respectively connected to the second power converting units 15, which are respectively connected to the first, second, and third power conversion cells 8a, 8b, and 8c, and set as protection targets are represented as protection targets 22. A sign 38 in Fig. 11 represents the second power converting units 15 of the first, second, and third power conversion cells 8a, 8b, and 8c that perform control for transmitting electric power from the pairs of the terminals 15-1 and 15-2 of the second input units to the pairs of terminals 15-3 and 15-4 of the second output units.

The distributed resistors 16 are set to a resistance value larger than the resistance value of the lumped resistor 10, a time constant of which with the primary filter capacitors 20 is one minute or ore. Therefore, in the configuration shown in Fig. 1 of the first embodiment, when all the semiconductor elements are off, it is likely that time required for electric discharge of the primary filter capacitors 20 increases.

Further, in the protection device 32 in the first embodiment or the second embodiment, power supply to the load 31 is stopped when electric discharge to the primary filter capacitors 20 and the secondary filter capacitors 21 is performed. When the power supply to the load 31 is started again, initial charging of the primary filter capacitors 20 and the secondary filter capacitors 21 is necessary.

The initial charging is a procedure in which the first power converting units 14 and the second power converting unit 15 charge the primary filter capacitors 20 and the secondary filter capacitors 21 to a controllable voltage while suppressing a rush current from flowing, for example, by interposing resistors in the charging routes from the power receiving end 3 to the primary filter capacitors 20 and the secondary filter capacitors 21. Further, if there is a difference between the voltage of the primary filter capacitors 20 and the voltage of the secondary filter capacitors 21, when the control of the second power converting units 15 is started, a rush current occurs in the semiconductor elements and the insulating transformers 26 configuring the second power converting units 15. Therefore, considerable time is required for the electric discharge and the initial charging of the primary filter capacitors 20 and the secondary filter capacitors 21 until the power supply to the load 31 is started.

Therefore, when an overvoltage occurs in the primary filter capacitor 20 and the secondary filter capacitor 21, the protection device 32 in this embodiment sets, as the protection targets 22, the primary filter capacitor 20 and the secondary filter capacitor 21 in which the overvoltage has occurred. The protection device 32 performs control for turning off all of the semiconductor elements 27a to 27d configuring the power converting units 14, turning on the discharge switch 11, and turning off the main switch 6. The protection device 32 performs control for turning on or off all the short-circuit switches 7 and turning on all the separation switches 9 to keep the states of ON or OFF of the respective switches. At this point, all the second power converting units 15 perform control for transmitting electric power from the pairs of terminals 15-1 and 15-2 of the second input units to the pairs of terminals 15-3 and 15-4 of the second output units and turning on or off the semiconductor elements 28a to 28h of the second power converting units 15 such that electric charges of the primary filter capacitors 20 move to the secondary filter capacitors 21. As a result, as in the discharge routes 23b shown in Fig. 11, electric charges of all the secondary filter capacitors 21 are discharged by the lumped resistor 10 connected in parallel to the secondary filter capacitors 21. Electric charges of all the primary filter capacitors 20 are consumed by the distributed resistors 16 connected in parallel to the primary filter capacitors 20. In addition, most of the electric charges are discharged by the lumped resistor 10.

A protecting operation of the power converter 100 according to this embodiment is explained with reference to Fig. 10. In Fig. 10, first, the operation of the power converter 100 according to this embodiment is started. Thereafter, at step S201, the protection device 32 always monitors whether the protecting operation of the power converter 100 is necessary. When the protecting operation is necessary (Yes), the protection device 32 proceeds to the protection-target setting step S202. Note that, when the protecting operation is unnecessary (No), the protection device 32 repeats step S201. When an overvoltage occurs in the primary filter capacitor 20 and the secondary filter capacitor 21, the protection device 32 of the power converter 100 performs the protection-target setting step S202 and sets, as the protection targets 22, the primary filter capacitor 20 and the secondary filter capacitor 21 in which the overvoltage has occurred. Subsequently, the protection device 32 performs the main-switch control step S203 and turns off the main switch 6. Subsequently, the protection device 32 performs the semiconductor-element control step S204 and turns off the semiconductor elements 27a to 27d of all the first power converting units 14. The protection device 32 controls ON or OFF of the semiconductor elements 28a to 28h of all the second power converting units 15 such that electric power is transmitted from the pairs of terminals 15-1 and 15-2 of the second input units to the pairs of terminals 15-3 and 15-4 of the second output units. Subsequently, the protection device 32 performs the discharge-switch control step S205 and turns on the discharge switch 11. Finally, the protection device 32 performs the short-circuit-switch control step S206 and keeps the states of ON or OFF of all the short-circuit switches 7. Thereafter, the protection device 32 returns to step S201 and shifts to a state for monitoring whether the protecting operation of the power converter 100 is necessary.

In order to cut a current route from the power receiving terminal 3, the main-switch control step S203 is most preferentially performed. In general, compared with a mechanical switch, time required for switching of ON and OFF states is short in the semiconductor elements. Therefore, the semiconductor-element control step S204 is performed second most preferentially. Further, there is an effect of immediately reducing the voltage of the protection targets 22 by turning on the discharge switch 11. Therefore, the discharge-switch control step S205 is third most preferentially performed. Therefore, by performing the protecting operation of the power converter 100 according to the flow explained above, the protection device 32 can more quickly suppress an overvoltage of the primary filter capacitor 20 and the secondary filter capacitor 21 set as the protection targets 22.

Note that the protection device 32 can simultaneously perform the main-switch control step S203, the semiconductor-element control step S204, and the discharge-switch control step S205. Taking into account the time required for switching ON and OFF of the main switch 6, the discharge switch 11, and the short-circuit switches 7, the order of performing the main-switch control step S203, the semiconductor-element control step S204, the discharge-switch

13

control step S205, and the short-circuit-switch control step S206 is not limited to the order shown in Fig. 10 and can be changed. When the states of ON and OFF before the start of the protecting operation can be kept even during the protecting operation, the short-circuit-switch control step S206 does not have to be performed. Note that, during the protecting operation, the ON state of the separation switches 9 is kept as it is.

A specific operation for moving electric charges of the primary filter capacitors 20 to the secondary filter capacitors 21 is explained with reference to Figs. 5 and 12.

Fig. 12 is an explanatory diagram showing operation timing of the semiconductor elements of the second power converting units during the electric discharge according to this embodiment. In Fig. 12, the abscissa represents time and the ordinate represents an ON or OFF state of the semiconductor elements 28a to 28d. In Fig. 12, switching commands for ON and OFF of a fixed frequency and a fixed conduction ratio are given to the semiconductor elements 28a and 28b. The switching command for OFF is always given to the semiconductor elements 28c and 28d. As shown in Fig. 5, the voltage of the primary filter capacitor 20 is applied to a terminal on a primary side 26-1 of the insulating transformer 26 in a rectangular wave shape via the pair of terminals 15-1 and 15-2 of the second input unit. The semiconductor elements 28c and 28d operate as diode rectifiers. Therefore, alternating-current power on the secondary side 26-2 of the insulating transformer 26 is converted into direct-current power. Electric charges by the direct-current power are accumulated in the secondary filter capacitor 21 via the pair of terminals 15-3 and 15-4 of the second output unit. Further, electric charges of the secondary filter capacitor 21 are discharged by the lumped resistor 10. As a result, in accordance with a decrease in the voltage applied to both terminals of the lumped resistor 10, the voltage of the primary filter capacitor 20 decreases. Therefore, it is possible to quickly discharge the primary filter capacitor 20.

When an overvoltage occurs in the primary filter capacitor 20 or the secondary filter capacitor 21, by performing control same as the control explained above, the protection device 32 can suppress the overvoltage of the primary filter capacitor 20 or the secondary filter capacitor 21 set as the protection target 22.

Therefore, when an overvoltage occurs in at least one of the primary filter capacitor 20 and the second filter capacitor 21 and at least one of the primary filter capacitor 20 and the secondary filter capacitor 21 is set as the protection target 22, the protection device 32 performs control for turning off the main switch 6 and the semiconductor elements 27a to 27d of all the first power converting units 14. In addition, the protection device 32 performs control for turning on the discharge switch 11 and all the separation switches 9. In addition, the protection device 32 performs control for switching ON and OFF of the semiconductor elements 28a to 28h of all the second power converting units 15 and transmitting electric power from the pairs of terminals 15-1 and 15-2 of all the second input units to the pairs of terminals 15-3 and 15-4 of all the second output units. According to these kinds of control, it is possible to attain effects same as the effects in the first embodiment.

Further, according to the control by the protection device 32 in this embodiment, when an overvoltage occurs in the primary filter capacitor 20, it is possible to cause the lumped resistor 10 having a small resistance value to consume electric charges of the primary filter capacitor 20 set as the protection target 22. Therefore, it is possible to further reduce time required for discharge of the electric charges of the primary filter capacitor 20 than when the protection device 32 causes the distributed resistor 16 to consume the electric charges.

Note that, when the switching of ON and OFF of the semiconductor elements 27a to 27d and the semiconductor elements 28a to 28h becomes uncontrollable, the protection device 32 can turn off the semiconductor elements 27a to 27d of the first power converting units 14 excluding the semiconductor elements 27a to 27d, the switching of ON and OFF of which has become uncontrollable. The protection device 32 can perform control for switching ON and OFF of the semiconductor elements 28a to 28h of the second power converting units 15 excluding the semiconductor elements 28a to 28h, the switching of ON and OFF of which has become uncontrollable, and transmitting electric power from the pairs of terminals 15-1 and 15-2 of the second input units to the pairs of terminals 15-3 and 15-4 of the second output units. According to these operations as well, it is possible to attain effects same as the effects explained above excluding the reduction of the time required for the discharge of the electric charges of the primary filter capacitors 20 connected to the second power converting units 15 including the semiconductor elements 28a to 28h, the switching of ON and OFF of which has become uncontrollable.

Third Embodiment

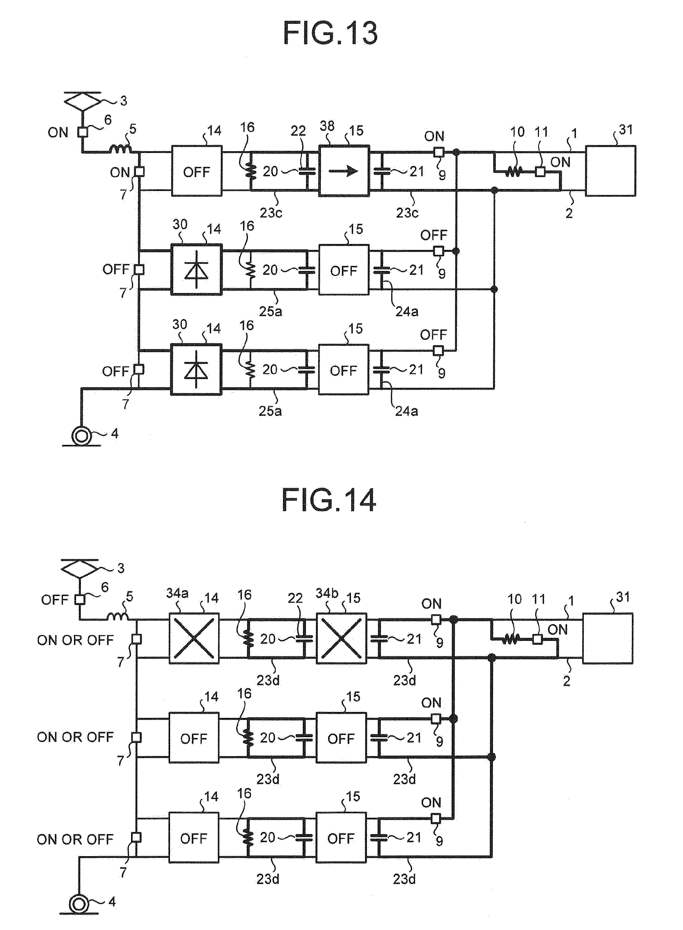

Fig. 13 is an explanatory diagram showing a protecting operation of a power converter according to a third embodiment for carrying out the present invention. The power converter 100 according to this embodiment is different from the first embodiment in points explained below. In Fig. 13, discharge routes 23c, residual charging units 24a, and charging routes 25a of the primary filter capacitors 20 and the secondary filter capacitors 21 controlled by the protection device 32 are indicated by thick lines. Characters ON and OFF in the main switch 6, the short-circuit switches 7, the separation switches 9, the discharge switch 11, the semiconductor elements 27a to 27d of the first power converting units 14, and the semiconductor elements 28a to 28h of the second power converting units 15 respectively represent states of ON and OFF thereof. In Fig. 13, the primary filter capacitor 20 set as a protection target in the first power conversion cell 8a is represented as the protection target 22. A sign 30 in Fig. 13 represents a state in which the first power converting units 14 operate as diode rectifiers. A sign 38 in Fig. 13 represents the second power converting unit 15 connected to the first power conversion cell 8a that performs control for transmitting electric power from the pair of the terminals 15-1 and 15-2 of the second input unit to the pair of terminals 15-3 and 15-4 of the second output unit.

In this embodiment, a method of, when an overvoltage occurs in the primary filter capacitor 20, after performing overvoltage suppression of a place where the overvoltage has occurred, quickly resuming power supply to the load 31 without requiring the initial charging explained in the second embodiment is presented. As an example, an operation performed when an overvoltage has occurred in the primary filter capacitor 20 of the first power conversion cell 8a is explained.

First, the protection device 32 sets, as the protection target 22, the primary filter capacitor 20 in which an overvoltage has occurred. As in the second embodiment, the second power converting unit 15 connected to the first power conversion cell 8a including the primary filter capacitor 20 set as the protection target 22 transmits electric power from the pair of terminals 15-1 and 15-2 of the second input unit to the pair of terminals 15-3 and 15-4 of the second output unit such that electric charges of the primary filter capacitor 20 are moved to the second filter capacitor 21. The protection device 32 controls ON and OFF of the semiconductor elements 28a to 28h of the second power converting unit 15 connected to the first power conversion cell 8a. The protection device 32 turns off the semiconductor elements 28a to 28h of the remaining second power converting units 15. The protection device 32 turns off the semiconductor elements 27a to 27d of all the first power converting units 14.

Subsequently, the protection device 32 turns on the short-circuit switch 7 of the first power conversion cell 8a including the primary filter capacitor 20 set as the protection target 22. The protection device 32 turns off the short-circuit switches 7 of the remaining second and third power conversion cells 8b and 8c. The protection device 32 turns on the separation switch 9 connected to the second power converting unit 15 connected to the first power conversion cell 8a including the primary filter capacitor 20 set as the protection target 22. The protection device 32 turns off the remaining separation switches 9. The protection device 32 performs control for turning on the discharge switch 11 and turning on the main switch 6 and keeps the states of ON or OFF of the respective switches. As a result, as in the discharge routes 23c shown in Fig. 13, the secondary filter capacitor 21 connected to the second power converting unit 15 connected to the first power conversion cell 8a is quickly discharged by the lumped resistor 10. Electric charges of the primary filter capacitor 20 set as the protection target 20 are consumed by the distributed resistor 16. In addition, most of the electric charges are consumed by the lumped resistor 10.

Therefore, when an overvoltage occurs in the primary filter capacitor 20 and the primary filter capacitor 20 is set as the protection target 22, by performing control for turning on the main switch 6 and the short-circuit switch 7 of the power conversion cell including the primary filter capacitor 20 set as the protection target 22, the protection device 32 can cause the distributed resistor 16 to consume electric charges of the primary filter capacitor 20 set as the protection target 22 and can suppress an overvoltage of the primary filter capacitor 20 set as the protection target 22.

At this point, as in the residual charging units 24a shown in Fig. 13, current routes of the secondary filter capacitors 21 connected to the second power converting units 15 connected to the second and third power conversion cells 8b and 8c are cut. Therefore, the secondary filter capacitors 21 are kept charged. Electric charges of the primary filter capacitors 20 of the second and third power conversion cells 8b and 8c are gently discharged by the distributed resistors 16. On the other hand, as in the charging routes 25a shown in Fig. 13, the main switch 6 and the short-circuit switch 7 of the first power conversion cell 8a is on. Therefore, the power converting units 14 of the second and third power conversion cells 8b and 8c operate as the diode rectifiers 30. Therefore, a sum of the voltages of the primary filter capacitors 20 of the second and third power conversion cells 8b and 8c is maintained at a voltage having amplitude equal to the amplitude of the overhead wire voltage.

After the discharge of the primary filter capacitor 20 and the secondary filter capacitor 21 of the first power conversion cells 8a is completed, the protection device 32 turns off the discharge switch 11 and reverses ON and OFF states of all the separation switches 9. The primary filter capacitors 20 of the second and third power conversion cells 8b and 8c and the second filter capacitors 21 connected to the second power converting units 15 connected to the second and third power conversion cells 8b and 8c are charged. Therefore, power supply to the load 31 can be resumed by the primary filter capacitors 20 not set as the protection target 22 and the secondary filter capacitors 21.

Therefore, when an overvoltage occurs in the primary filter capacitor 20 and the primary filter capacitor 20 is set as the protection target 22, the protection device 32 performs control for turning on the main switch 6 and the discharge switch 11. In addition, the protection device 32 performs control for turning on the short-circuit switch 7 of the power conversion cell including the primary filter capacitor 20 set as the protection target 22 and turning off the remaining short-circuit switches 7. Further, the protection device 32 performs control for turning on the separation switch 9 connected to the second power converting unit 15 connected to the power conversion cell including the primary filter capacitor 20 set as the protection target 22 and turning off the remaining separation switches 9. In addition, the protection device 32 performs control for turning off the semiconductor elements 27a to 27d of all the first power converting units 14. The protection device 32 performs control for switching ON and OFF of the semiconductor elements 28a to 28h of the second power converting unit 15 connected to the power conversion cell including the primary filter capacitor 20 set as the protection target 22, transmitting electric power from the pair of terminals 15-1 and 15-2 of the second input unit to the pair of terminals 15-3 and 15-4 of the second output unit, and turning off the semiconductor elements 28a to 28h of the remaining second power converting units 15. By performing control for turning on the main switch 6 and the short-circuit switch 7 of the first power conversion cell 8a including the primary filter capacitor 20 set as the protection target 22, as in the first embodiment, it is possible to suppress an overvoltage of the primary filter capacitor 20 set as the protection target 22.

As in the second embodiment, according to the control by the protection device 32 in this embodiment, when an overvoltage occurs in the primary filter capacitors 20, it is possible to cause the lumped resistor 10 having a small resistance value to consume electric charges of the primary filter capacitor 20 set as the protection target 22. Therefore, it is possible to further reduce the time required for discharge of the electric charges of the primary filter capacitor 20 than when the protection device 32 causes the distributed resistor 16 to consume the electric charges.

According to this embodiment, when an overvoltage occurs in the primary filter capacitor 20, it is possible to discharge electric charges of the primary filter capacitor 20 set as the protection target 22 and the secondary filter capacitor 21 connected to the second power converting unit 15 connected to the first power conversion cell 8a including the primary filter capacitor 20. When power supply to the load 31 is resumed, it is possible to make it unnecessary to perform initial charging of the primary filter capacitors 20 not set as the protection target 22 and the secondary filter capacitors 21 connected to the second power converting units 15 connected to the second and third power conversion cells 8b and 8c including the primary filter capacitors 20, and thus, it is made possible to reduce the time in which the power supply to the load 31 is interrupted.

Note that, when the switching of ON and OFF of the semiconductor elements 27a to 27d and the semiconductor elements 28a to 28h becomes uncontrollable, the protection device 32 can turn off the semiconductor elements 27a to 27d of the first power converting units 14 excluding the semiconductor elements 27a to 27d, the switching of ON and OFF of which has become uncontrollable. The protection device 32 can perform control for switching ON and OFF of the semiconductor elements 28a to 28h of the second power converting units 15 excluding the semiconductor elements 28a to 28h, the switching of ON and OFF of which has become uncontrollable, and transmitting electric power from the pairs of terminals 15-1 and 15-2 of the second input units to the pairs of terminals 15-3 and 15-4 of the second output units. According to these operations as well, it is possible to attain effects same as the effects explained above excluding the reduction of the time required for the discharge of the electric charges of the primary filter capacitors 20 connected to the second power converting units 15 including the semiconductor elements 28a to 28h, the switching of ON and OFF of which has become uncontrollable.

Fourth Embodiment

Fig. 14 is an explanatory diagram showing a protecting operation of a power converter according to a fourth embodiment for carrying out the present invention. The power converter 100 according to this embodiment is different from the first embodiment in points explained below. In Fig. 14, discharge routes 23d of the primary filter capacitors 20 and the secondary filter capacitors 21 controlled by the protection device 32 are indicated by thick lines. Characters ON and OFF in the main switch 6, the short-circuit switches 7, the separation switches 9, the discharge switch 11, the semiconductor elements 27a to 27d of the first power converting units 14, and the semiconductor elements 28a to 28h of the second power converting units 15 respectively represent states of ON and OFF thereof. In Fig. 14, the primary filter capacitor 20 set as a protection target in the first power conversion cell 8a is represented as the protection target 22. Further, signs 34a and 34b in Fig. 14 respectively represent the first power converting unit 14 including the semiconductor elements 27a to 27d, switching of ON and OFF of which has become uncontrollable, in the first power conversion cell 8a and the second power converting unit 15 including the semiconductor elements 28a to 28h, the switching of ON and OFF of which has become uncontrollable, and connected to the first power conversion cell 8a.

In the control for the overvoltage suppression for the primary filter capacitors 20 and the secondary filter capacitors 21 explained in the second embodiment and the third embodiment, the second power converting units 15 are controlled to cause the lumped resistor 10 to consume energy of the primary filter capacitors 20. However, when a failure occurs in the semiconductor elements 28a to 28h of the second power converting units 15 or a gate driver that drives the semiconductor elements 28a to 28h, switching control of ON and OFF cannot be normally performed. In this case, the method explained in the second embodiment and the third embodiment cannot be executed.

When the switching of ON and OFF of the semiconductor elements 27a to 27d of the first power converting units 14 has become uncontrollable, it is likely that an alternating current from the power receiving end 3 flows to the primary filter capacitors 20 and causes an overvoltage of the primary filter capacitors 20. In the case explained above, current routes to the internal DC links 18 connected to the semiconductor elements, the switching of ON and OFF of which has become uncontrollable, have to be cut. Depending on an operation state of the power converter 100, electric power regenerated from the load 31 to the positive bus 1 and the negative bus 2 has to be consumed.

When the switching of ON and OFF of the semiconductor elements 27a to 27d and the semiconductor elements 28a to 28h becomes uncontrollable, the protection device 32 of this embodiment sets, as the protection target 22, the primary filter capacitor 20 connected to the first power converting unit 14 including the semiconductor elements 27a to 27d of the first power conversion cell 8a, the switching of ON and OFF of which has become uncontrollable, or the primary filter capacitor 20 connected to the second power converting unit 15 including the semiconductor elements 28a to 28h, the switching of ON and OFF of which has become uncontrollable. For example, the protection device 32 receives a signal from a gate driver (not shown in the figure), which controls the switching of ON and OFF of the semiconductor elements 27a to 27d and the semiconductor elements 28a to 28h, and determines whether the state of the semiconductor elements is normal or abnormal. Alternatively, the protection device 32 receives a signal from a protection circuit (not shown in the figure) built in a package in which the semiconductor elements are built in and determines whether the state of the semiconductor elements is normal or abnormal. As a method of detecting abnormality of the semiconductor elements, there are several types. The type of the method is not particularly limited in this embodiment. The protection device 32 performs control for turning off all of the semiconductor elements 27a to 27d and the semiconductor elements 28a to 28h excluding the semiconductor elements, the switching of ON and OFF of which has become uncontrollable. In addition, the protection device 32 performs control for turning on the discharge switch 11 and turning off the main switch 6. In addition, the protection device 32 performs control for turning on or off all the short-circuit switches 7 and turning on all the separation switches 9 and keeps states of ON or OFF of the respective switches.

The protecting operation of the power converter according to this embodiment is explained with reference to Fig. 10. In Fig. 10, first, the operation of the power converter 100 according to this embodiment is started. Therefore, at step S201, the protection device 32 always monitors whether the protecting operation of the power converter 100 is necessary. When the protecting operation is necessary (Yes), the protection device 32 proceeds to the protection-target setting step S202. Note that, when the protecting operation is unnecessary (No), the protection device 32 repeats step S201. When switching of ON and OFF of the semiconductor elements 27a to 27d and the semiconductor elements 28a to 28h becomes uncontrollable, the protection device 32 of the power converter 100 performs the protection-target setting step S202 and sets, as the protection target 22, the primary filter capacitor 20 connected to the first power converting unit 14 including the semiconductor elements 27a to 27d, the switching of ON and OFF of which has become uncontrollable, or the primary capacitor 20 connected to the first power converting unit 14 connected to the second power converting units 15 including the semiconductor elements 28a to 28h, the switching of ON and OFF of which has become uncontrollable. Subsequently, the protection device 32 performs the main-switch control step S203 and turns off the main switch 6. Subsequently, the protection device 32 performs the semiconductor-element control step S204 and turns off the semiconductor elements 27a to 27d of all the first power converting units 14 and the semiconductor elements 28a to 28h of all the second power converting units 15 excluding the semiconductor elements, the switching of ON and OFF of which has become uncontrollable. Subsequently, the protection device 32 performs the discharge-switch control step S205 and turns on the discharge switch 11. Finally, the protection device 32 performs the short-circuit-switch control step S206 and keeps the states ON or OFF of all the short-circuit switches 7. Thereafter, the protection device 32 returns to step S201 and shifts to a state for monitoring whether the protecting operation of the power converter 100 is necessary.

In order to cut a current route from the power receiving terminal 3, the main-switch control step S203 is most preferentially performed. In general, compared with a mechanical switch, time required for switching of ON and OFF states is short in the semiconductor elements. Therefore, the semiconductor-element control step S204 is performed second most preferentially. Further, there is an effect of immediately reducing the voltage of the protection target 22 by turning on the discharge switch 11. Therefore, the discharge-switch control step S205 is third most preferentially performed. Therefore, by performing the protecting operation of the power converter 100 according to the flow explained above, the protection device 32 can more quickly suppress an overvoltage of the primary filter capacitor 20 set as the protection target 22.

Note that the protection device 32 can simultaneously perform the main-switch control step S203, the semiconductor-element control step S204, and the discharge-switch control step S205. Taking into account time required for switching ON and OFF of the main switch 6, the discharge switch 11, and the short-circuit switches 7, the order of performing the main-switch control step S203, the semiconductor-element control step S204, the discharge-switch control step S205, and the short-circuit-switch control step S206 is not limited to the order shown in Fig. 10 and can be changed. When states of ON and OFF before the start of the protecting operation can be kept even during the protecting operation, the short-circuit-switch control step S206 does not have to be performed. According to these kinds of control, it is possible to attain effects same as the effects in the first embodiment. Note that, during the protecting operation, the ON state of the separation switches 9 is kept as it is.

According to this embodiment, when the semiconductor elements, the switching of ON and OFF of which has become uncontrollable, are present, it is possible to prevent an overvoltage from occurring in the primary filter capacitor 20 and the secondary filter capacitor 21. Further, it is possible to prevent the primary filter capacitor 20 and the secondary filter capacitor 21 from being short-circuited by the semiconductor elements, the switching of ON and OFF of which has become uncontrollable, and the remaining semiconductor elements.

In Fig. 14, the switching of ON and OFF of both of the semiconductor elements 27a to 27d of the first power converting unit 14 in the first power conversion cell 8a and the semiconductor elements 28a to 28h of the second power converting unit 15 is uncontrollable. However, even when the switching of ON and OFF of one of the semiconductor elements 27a to 27d and the semiconductor elements 28a to 28h becomes uncontrollable, if all the semiconductor elements excluding the semiconductor elements, the switching of ON and OFF of which has become uncontrollable, are turned off, the same effects are attained.

Fifth Embodiment

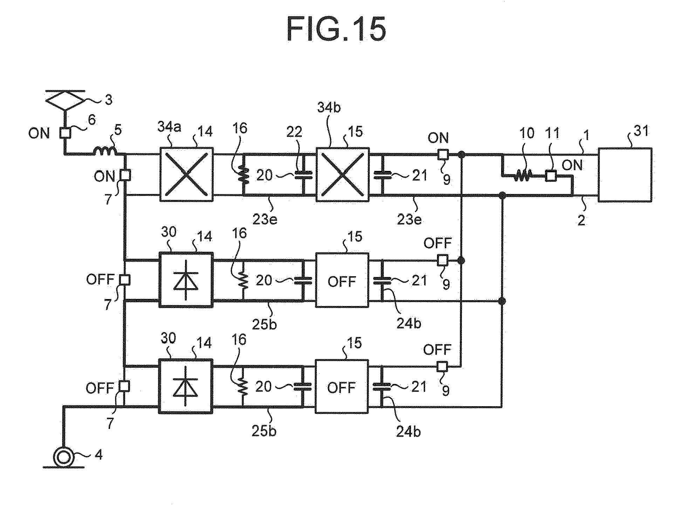

Fig. 15 is an explanatory diagram showing a protecting operation of a power converter according to a fifth embodiment for carrying out the present invention. The power converter 100 according to this embodiment is different from the first embodiment in points explained below. In Fig. 15, discharge routes 23e, residual charging units 24b, and charging routes 25b of the primary filter capacitors 20 and the secondary filter capacitors 21 controlled by the protection device 32 are indicated by thick lines. Characters ON and OFF in the main switch 6, the short-circuit switches 7, the separation switches 9, the discharge switch 11, the semiconductor elements 27a to 27d of the first power converting units 14, and the semiconductor elements 28a to 28h of the second power converting units 15 respectively represent states of ON and OFF thereof. In Fig. 15, the primary filter capacitor 20 set as a protection target in the first power conversion cell 8a is represented as the protection target 22. A sign 30 in Fig. 15 represents a state in which the first power converting units 14 operate as diode rectifiers. Signs 34a and 34b in Fig. 15 respectively represent the first power converting unit 14 including the semiconductor elements 27a to 27d, switching of ON and OFF of which has become uncontrollable, in the first power conversion cell 8a and the second power converting unit 15 including the semiconductor elements 28a to 28h, switching of ON and OFF of which has become uncontrollable, and connected to the first power conversion cell 8a.

When the semiconductor elements, the switching of ON and OFF becomes uncontrollable, are present, a protecting operation explained below is performed. As an example, an operation performed when the switching of ON and OFF of the semiconductor elements 27a to 27d of the first power converting unit 14 in the first power conversion cell 8a and the semiconductor elements 28a to 28h of the second power converting unit connected to the first power conversion cell 8a has become uncontrollable is explained.

When the switching of ON and OFF of the semiconductor elements 27a to 27d and the semiconductor elements 28a to 28h becomes uncontrollable, the protection device 32 in this embodiment sets, as the protection target 22, the primary filter capacitor 20 connected to the first power converting unit 14 including the semiconductor elements 27a to 27d, the switching of ON and OFF of which is uncontrollable, or the primary filter capacitor 20 of the first power conversion cell 8a connected to the second power converting unit 15 including the semiconductor elements 28a to 28h, the switching of ON and OFF of which has become uncontrollable. Further, the protection device 32 performs control for turning on the main switch 6 and the discharge switch 11. In addition, the protection device 32 performs control for turning on the short-circuit switch 7 of the first power conversion cell 8a including the primary filter capacitor 20 set as the protection target 22 and turning off the short-circuit switches 7 of the remaining second and third power conversion cells 8b and 8c. The protection device 32 performs control for turning on the separation switch 9 connected to the second power converting unit 15 connected to the first power conversion cell 8a including the primary filter capacitor 20 set as the protection target 22 and turning off the remaining separation switches 9. Further, the protection device 32 performs control for turning off the semiconductor elements 27a to 27d and the semiconductor elements 28a to 28h excluding the semiconductor elements, the switching of ON and OFF of which has become uncontrollable. By performing the control for turning on the main switch 6 and the short-circuit switch 7 of the first power conversion cell 8a including the primary filter capacitor 20 set as the protection target 22, as in the first embodiment, it is made possible to suppress an overvoltage of the primary filter capacitor 20 set as the protection target 22.

According to this embodiment, when the semiconductor elements, the switching of ON and OFF of which has become uncontrollable, are present, it is possible to prevent an overvoltage from occurring in the primary filter capacitor 20 set as the protection target 22 and the secondary filter capacitor 21 connected to the second power converting unit 15 connected to the first power conversion cell 8a including the primary filter capacitor 20. It is also possible to prevent the primary filter capacitor 20 and the secondary filter capacitor 21 from being short-circuited by the semiconductor elements, the switching of ON and OFF of which has become uncontrollable, and the remaining semiconductor elements.

According to this embodiment, when the switching of ON and OFF of the semiconductor elements 27a to 27d and the semiconductor elements 28a to 28h becomes uncontrollable, it is possible to discharge the primary filter capacitor 20 set as the protection target 22 and the secondary filter capacitor 21 connected to the second power converting unit 15 connected to the first power conversion cell 8a including the primary filter capacitor 20. When power supply to the load 31 is resumed, it is possible to make it unnecessary to perform initial charging of the primary filter capacitors 20 not set as the protection target 22 and the secondary filter capacitors 21 connected to the second power converting units 15 connected to the second and third power conversion cells 8b and 8c including the primary filter capacitors 20, and thus, it is made possible to reduce the time in which the power supply to the load 31 is interrupted.

In Fig. 15, the switching of ON and OFF of both of the semiconductor elements 27a to 27d of the first power converting unit 14 in the first power conversion cell 8a and the semiconductor elements 28a to 28h of the second power converting unit 15 is uncontrollable. However, even when the switching of ON and OFF of one of the semiconductor elements 27a to 27d and the semiconductor elements 28a to 28h becomes uncontrollable, if all the semiconductor elements excluding the semiconductor elements, the switching of ON and OFF of which has become uncontrollable, are turned off, the same effects are attained.

Sixth Embodiment

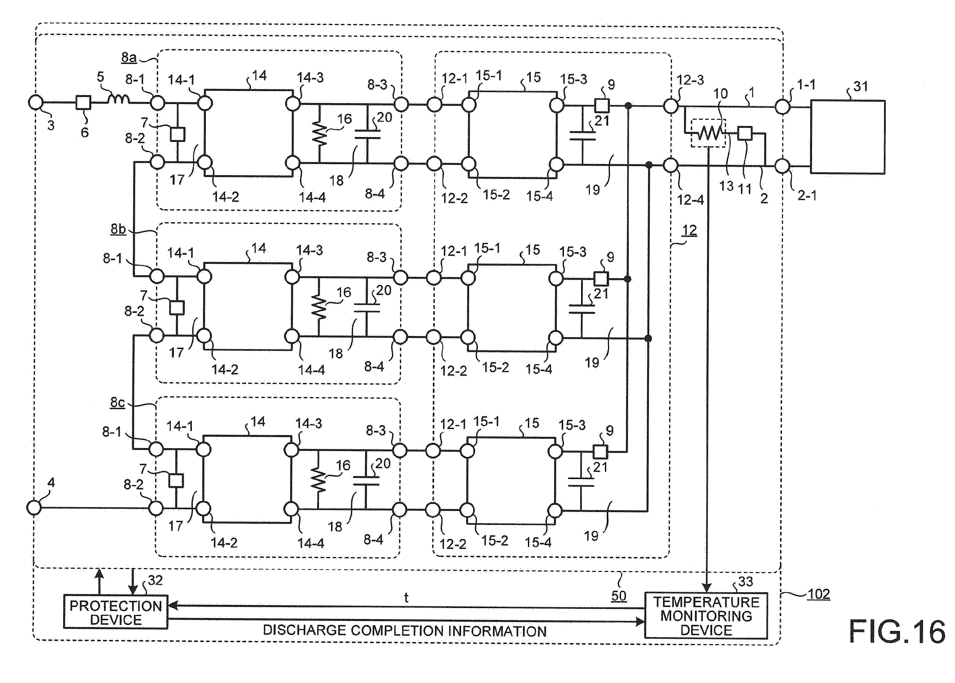

Fig. 16 is a circuit diagram of a power converter according to a sixth embodiment for implementing the present invention. A power converter 102 according to this embodiment is different from the first embodiment in points explained below. In Fig. 16, the power converter 102 further includes a temperature monitoring device 33 that monitors the temperature of the lumped resistor 10.

The protection device 32 stops the power converter 102 to suppress an overvoltage and outputs, to the temperature monitoring device 33, information indicating that discharge of electric charges of the primary filter capacitors 20 and the secondary filter capacitors 21 is completed. After receiving the discharge completion information, the temperature monitoring device 33 acquires the temperature of the lumped resistor 10 with, for example, a temperature sensor (not shown in the figure). The temperature monitoring device 33 outputs a value t of the acquired temperature to the protection device 32.

After the power converter 102 stops for overvoltage suppression and discharges the primary filter capacitors 20 and the secondary filter capacitors 21, the protection device 32 determines whether the value t of the temperature input from the temperature monitoring device 33 is equal to or smaller than a value set in advance in designing. When the value t of the temperature is equal to or smaller than the value set in advance in the designing, the protection device 32 performs control for resuming the operation of the power converter 102 and supplying electric power to the load 31. When the value t of the temperature exceeds the value set in advance in the designing, the protection device 32 does not resume the operation of the power converter 102 and, after the time set in advance elapses, outputs the discharge completion information to the temperature monitoring device 33 again. As explained above, the temperature monitoring device 33 acquires the temperature of the lumped resistor 10 again after receiving the discharge completion information. Therefore, the protection device 32 repeats the control explained above until the temperature of the lumped resistor 10 decreases to the value set in advance in the designing or less. Therefore, the protection device 32 does not resume the operation of the power converter 102.

In the following explanation, a method of determining a threshold of the temperature set in advance in the designing is explained. When discharge of electric charges of the primary filter capacitors 20 and the secondary filter capacitors 21 is performed to suppress an overvoltage, the electric charges of the primary filter capacitors 20 and the secondary filter capacitors 21 are consumed by the lumped resistor 10. Therefore, the lumped resistor 10 generates heat. It is conceivable that the temperature of the lumped resistor 10 rises most when the electric charges of all of the primary filter capacitors 20 and the secondary filter capacitors 21 are discharged at high speed by the lumped resistor 10. A threshold of temperature for determining possibility of resumption of the operation of the power converter 102 is set in advance in designing on the basis of a temperature rise width at this point and a durable temperature of the lumped resistor 10.

Therefore, after the electric charges of the primary filter capacitors 20 and the secondary filter capacitors 21 are discharged, when the temperature of the lumped resistor 10 monitored by the temperature monitoring device 33 is equal to or lower than the temperature set in advance, by performing control for supplying electric power to the load 31, the protection device 32 can prevent the lumped resistor 10 and peripheral devices of the lumped resistor 10 from being burnt out.

Seventh Embodiment

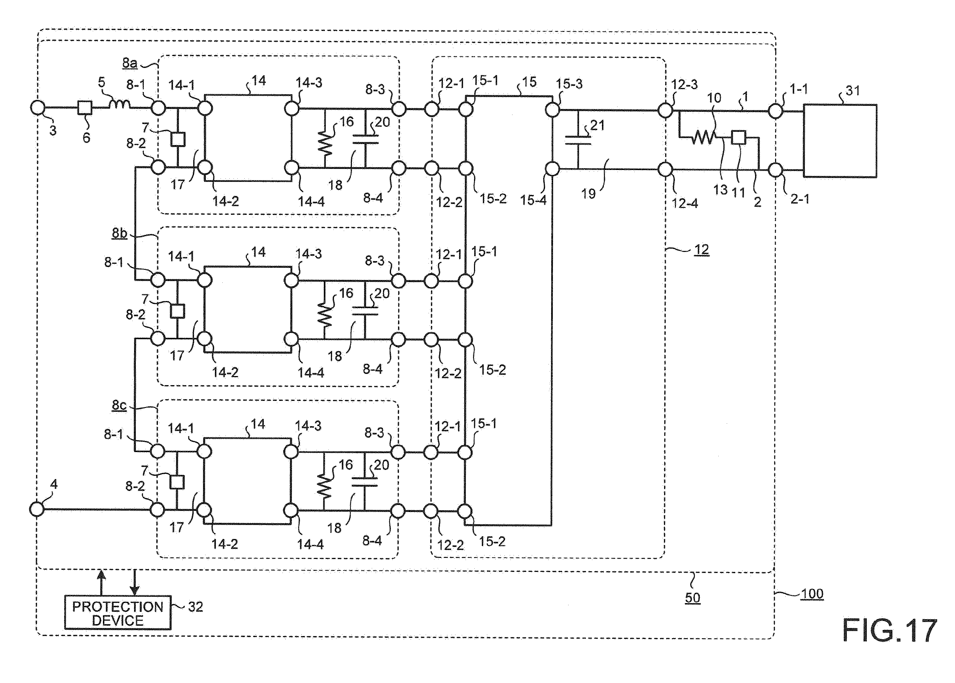

Fig. 17 is a circuit diagram of a power converter according to a seventh embodiment for carrying out the present invention. The power converter 100 according to this embodiment is different from the first embodiment in points explained below. In Fig. 17, the power conversion body 12 includes three power-conversion-body input ends, each including the pair of terminals 12-1 and 12-2, one power-conversion-body output end including the pair of terminals 12-3 and 12-4, one second power converting unit 15 that performs DC/DC conversion, and one secondary filter capacitor 21. The power conversion body 12 converts direct-current power input to the pairs of terminals 12-1 and 12-2 of the power-conversion-body input ends into direct-current power output to the pair of terminals 12-3 and 12-4 of the power-conversion-body output end.

The second power converting unit 15 includes three second input units each including a pair of terminals 15-1 and 15-2, a second output unit including a pair of terminals 15-3 and 15-4, and a plurality of semiconductor elements (not shown in the figure) that perform switching. The second power converting unit 15 converts direct-current power input to the pairs of terminals 15-1 and 15-2 of the second input units into direct-current power output to the pair of terminals 15-3 and 15-4 of the second output unit. Note that the number of second input units is not limited to three and only has to be the same as the number of power conversion cells.

The pair of terminals 15-1 and 15-2 of each of the second input units are connected to the pair of terminals 12-1 and 12-2 of the corresponding one of the power-conversion-body input ends. That is, the pair of terminals 15-1 and 15-2 of each of the second input units are connected only to the pair of terminals 12-1 and 12-2 of any one of the power-conversion-body input ends. One terminal 15-1 of each of the second input units and one terminal 12-1 of the corresponding one of the power-conversion-body input ends are connected in the same polarity as a positive pole side of direct-current power. The other terminal 15-2 of each of the second input units and the other terminals 12-2 of the corresponding one of the power-conversion-body input ends are connected in the same polarity as a negative pole side of the direct-current power.

The pair of terminals 15-3 and 15-4 of the second output unit is connected to the pair of terminals 12-3 and 12-4 of the power conversion body output end. One terminal 15-3 of the second output unit and one terminal 12-3 of the power-conversion-body output end are connected in the same polarity as a positive pole side of direct-current power. The other terminal 15-4 of the second output unit and the other terminal 12-4 of the power-conversion-body output end are connected in the same polarity as a negative pole side of the direct current.

The secondary filter capacitor 21 is connected to each of the pair of terminals 12-3 and 12-4 of the power-conversion-body output end and the pair of terminals 15-3 and 15-4 of the second output unit.

The DC port 19 indicates a circuit from the pair of terminals 15-3 and 15-4 of the second output unit to the pair of terminals 12-3 and 12-4 of the power-conversion-body output end.

According to the above explanation, the power converter 100 further includes the lumped resistor 10 and the discharge switch 11 that switches short circuit and open circuit. The power conversion body 12 further includes the one second power converting unit 15 and the one secondary filter capacitor 21. The second power converting unit 15 for converting the direct-current power into direct-power current includes the pairs of terminals 15-1 and 15-2 of N second input units, which are connected to the pairs of the terminals 12-1 and 12-2 of the power-conversion-body input ends of the corresponding second input units, and to which direct-current power is input, the pair of terminals 15-3 and 15-4 of the second output unit connected to the pair of terminals 12-3 and 12-4 of the power-conversion-body output end, and the plurality of semiconductor elements that perform switching, and outputs the direct-current from the pair of terminals 15-3 and 15-4. The secondary filter capacitor 21 is connected to the pair of terminals 15-3 and 15-4 of the second output unit in parallel. The series connection body 13, in which the lumped resistor 10 and the discharge switch 11 are connected in series to each other, is connected to the pair of terminals 12-3 and 12-4 of the power-conversion-body output end in parallel.

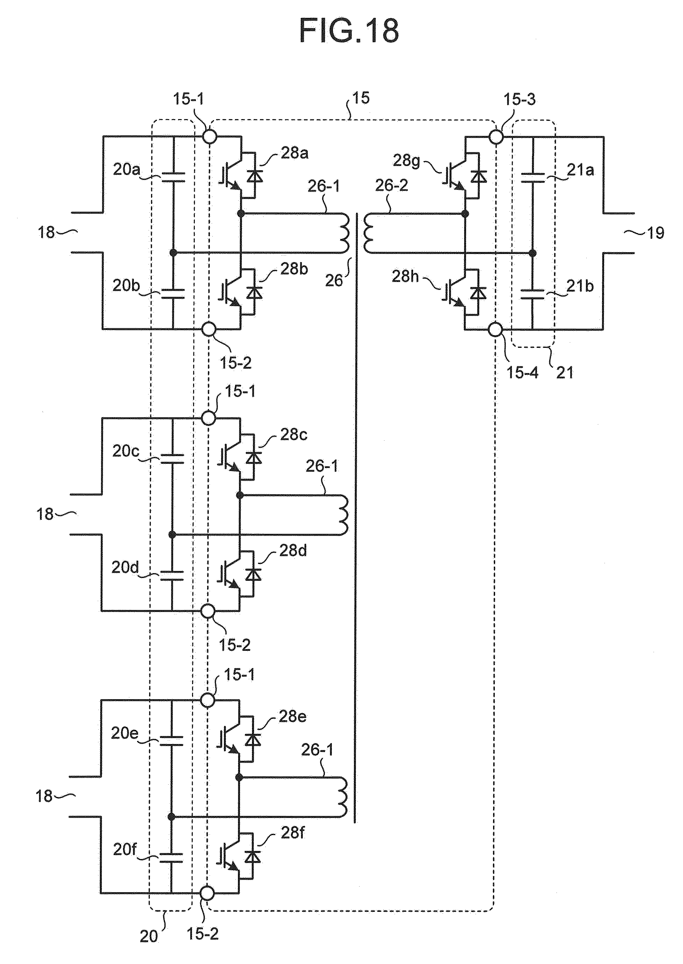

The configuration and the operation of the second power converting unit 15 are explained. Fig. 18 is a circuit diagram of an example in which a half-bridge circuit is applied to the second power converting unit according to the seventh embodiment. In Fig. 18, the second power converting unit 15 in the power conversion body 12 includes a bridge circuit including eight semiconductor elements 28a to 28h such as MOS-FETs and the insulating transformer 26. In the second power converting unit 15, the semiconductor elements 28a and 28b are connected in series, the semiconductor elements 28c and 28d are connected in series, and the semiconductor elements 28e and 28f are connected in series.

The primary filter capacitors 20a and 20b are connected in series to each other. The pair of semiconductor elements 28a and 28b and the pair of primary filter capacitors 20a and 20b are connected in parallel. Further, the pair of semiconductor elements 28c and 28d and the pair of primary filter capacitors 20c and 20d are connected in parallel. The pair of semiconductor elements 28e and 28f and the pair of primary filter capacitors 20e and 20f are connected in parallel. Direct-current power supplied from the internal DC link 18 is supplied from between the semiconductor elements 28a and 28b to the primary side 26-1 of the insulating transformer 26 and supplied from between the primary filter capacitors 20a and 20b to the primary side 26-1 as alternating-current power. Similarly, the direct-current power is supplied from between the semiconductor elements 28c and 28d to the primary side 26-1 and supplied from between the primary filter capacitors 20c and 20d to the primary side 26-1 as alternating-current power. Similarly, the direct-current power is supplied from between the semiconductor elements 28e and 28f to the primary side 26-1 and supplied from between the primary filter capacitors 20e and 20f to the primary side 26-1 as alternating-current power.

The alternating-current power supplied from the primary side 26-1 to the secondary side 26-2 of the insulating transformer 26 is supplied from the secondary side 26-2 to between the semiconductor elements 28g and 28h, supplied from the secondary side 26-2 to between the secondary filter capacitors 21a and 21b, and supplied to the DC port 19. The direct-current power is converted into direct-current power in accordance with switching of the semiconductor elements 28a to 28h. Contrary to the above, the second power converting unit 15 can also transmit the direct-current power from the DC port 19 to the internal DC link 18. Therefore, the second power converting unit 15 can transmit the direct-current power in both the directions. The primary side 26-1 and the secondary side 26-2 are electrically insulated by the insulating transformers 26. That is, the second power converting unit 15 is a so-called bidirectional insulating DC/DC converter.

Note that the second power converting unit 15 is not limited to the configuration shown in Fig. 18. The second power converting unit 15 only has to be able to transmit the direct-current power in both the directions. The primary side 26-1 and the secondary side 26-2 only have to be electrically insulated by the insulating transformer 26. Because only one secondary side 26-2 is provided, it is possible to reduce the insulating transformer 26 in size.

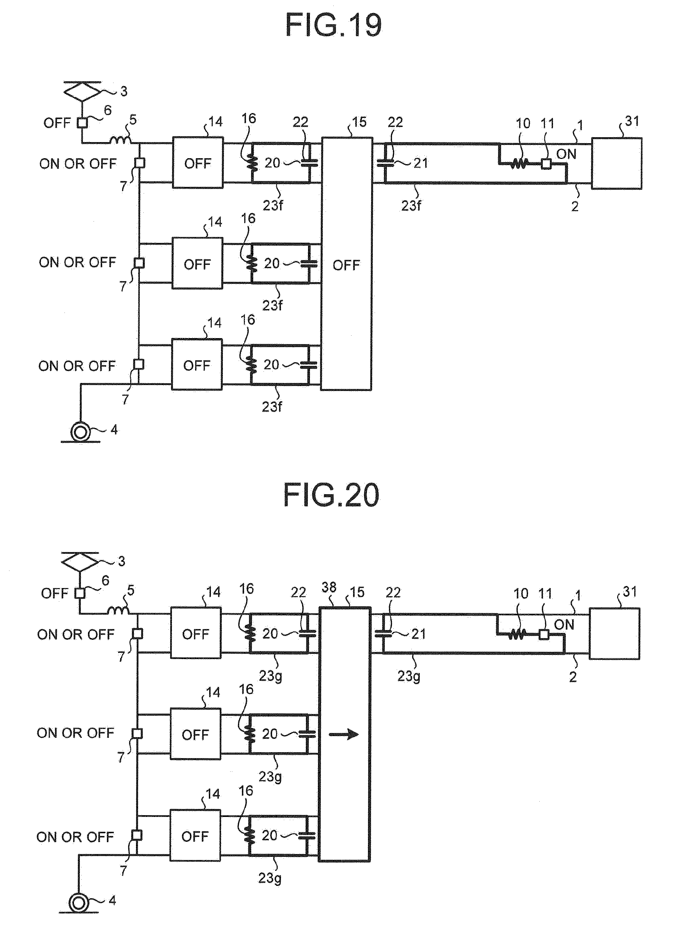

The operation of the protection device 32 is explained. Fig. 19 is an explanatory diagram showing a protecting operation of the power converter according to this embodiment. In Fig. 19, discharge routes 23f of the primary filter capacitors 20 and the secondary filter capacitor 21 controlled by the protection device 32 are indicated by thick lines. Characters ON and OFF in the main switch 6, the short-circuit switches 7, the discharge switch 11, the semiconductor elements 27a to 27d of the first power converting units 14, and the semiconductor elements 28a to 28h of the second power converting unit 15 respectively represent states of ON and OFF thereof. In Fig. 19, the primary filter capacitor 20 set as a protection target in the first power conversion cell 8a and the secondary filter capacitor 21 connected to the second power converting unit 15 and set as a protection target are represented as the protection targets 22.

When an overvoltage occurs in the primary filter capacitor 20 and the secondary filter capacitor 21, the protection device 32 in this embodiment sets, as the protection targets 22, the primary filter capacitor 20 and the secondary filter capacitor 21 in which the overvoltage has occurred. Specifically, the protection device 32 monitors voltage values of the primary filter capacitor 20 and the secondary filter capacitor 21 detected by voltage sensors (not shown in the figure) that respectively detect the voltages of the primary filter capacitor 20 and the secondary filter capacitor 21. When the voltage values of the primary filter capacitor 20 and the secondary filter capacitor 21 exceed a value set in advance, the protection device 32 determines states of the primary filter capacitor 20 and the secondary filter capacitor 21 as abnormal and sets the primary filter capacitor 20 and the secondary filter capacitor 21 as the protection targets 22 on the basis of the abnormality of the primary filter capacitor 20 and the secondary filter capacitor 21. The protection device 32 performs control for turning off all of the semiconductor elements 27a to 27d and the semiconductor elements 28a to 28h, turning on the discharge switch 11, and turning off the main switch 6. Further, the protection device 32 performs control for turning on or off all the short-circuit switches 7 and keeps the states of ON or OFF of the respective switches. As a result, as in the discharge routes 23f shown in Fig. 19, electric charges of the secondary filter capacitor 21 are quickly consumed by the lumped resistor 10 connected to the secondary filter capacitor 21 in parallel. Electric charges of the primary filter capacitor 20 are gently consumed by the distributed resistor 16 connected to the primary filter capacitor 20 in parallel.

A protecting operation of the power converter according to this embodiment is explained with reference to Fig. 10. In Fig. 10, first, the operation of the power converter 100 according to this embodiment is started. Thereafter, at step S201, the protection device 32 always monitors whether the protecting operation of the power converter 100 is necessary. When the protecting operation is necessary (Yes), the protection device 32 proceeds to the protection-target setting step S202. Note that, when the protecting operation is unnecessary (No), the protection device 32 repeats step S201. When an overvoltage occurs in the primary filter capacitor 20 and the secondary filter capacitor 21, the protection device 32 of the power converter 100 performs the protection-target setting step S202 and sets, as the protection targets 22, the primary filter capacitor 20 and the secondary filter capacitor 21 in which the overvoltage has occurred. Subsequently, the protection device 32 performs the main-switch control step S203 and turns off the main switch 6. Subsequently, the protection device 32 performs the semiconductor-element control step S204 and turns off all of the semiconductor elements 27a to 27d and the semiconductor elements 28a to 28h. Subsequently, the protection device 32 performs a discharge-switch control step S205 and turns on the discharge switch 11. Finally, the protection device 32 performs a short-circuit-switch control step S206 and keeps the states of ON or OFF of all the short-circuit switches 7. Thereafter, the protection device 32 returns to step S201 and shifts to a state for monitoring whether the protecting operation of the power converter 100 is necessary.

In order to cut a current route from the power receiving terminal 3, the main-switch control step S203 is most preferentially performed. In general, compared with a mechanical switch, time required for switching of ON and OFF states is short in the semiconductor elements. Therefore, the semiconductor-element control step S204 is performed second most preferentially. Further, there is an effect of immediately reducing the voltage of the protection targets 22 by turning on the discharge switch 11. Therefore, the discharge-switch control step S205 is third most preferentially performed. Therefore, by performing the protecting operation of the power converter 100 according to the flow explained above, the protection device 32 can more quickly suppress an overvoltage of the primary filter capacitor 20 and the secondary filter capacitor 21 set as the protection targets 22.

Note that the protection device 32 can simultaneously perform the main-switch control step S203, the semiconductor-element control step S204, and the discharge-switch control step S205. Taking into account the time required for switching ON and OFF of the main switch 6, the discharge switch 11, and the short-circuit switches 7, the order of performing the main-switch control step S203, the semiconductor-element control step S204, the discharge-switch control step S205, and the short-circuit-switch control step S206 is not limited to the order shown in Fig. 10 and can be changed. When the states of ON and OFF before the start of the protecting operation can be kept even during the protecting operation, the short-circuit-switch control step S206 does not have to be performed.

Note that, during the protecting operation, the ON state of the separation switches 9 is kept.

In Fig. 19, an overvoltage has occurred in the primary filter capacitor 20 and the secondary filter capacitor 21. However, even when an overvoltage occurs only in the primary filter capacitor 20, by performing the control explained above, effects same as the effects in the first embodiment are attained.

When an overvoltage occurs in the secondary filter capacitor 21 and the secondary filter capacitor 21 is set as the protection target 22, by performing control for turning on the discharge switch 11, the protection device 32 can cause the lumped resistor 10 to consume electric charges of the secondary filter capacitor 21 set as the protection target 22 and can suppress an overvoltage of the secondary filter capacitor 21 set as the protection target 22.

Therefore, when an overvoltage occurs in at least one of the primary filter capacitor 20 and the secondary filter capacitor 21 and at least one of the primary filter capacitor 20 and the secondary filter capacitor 21 is set as the protection target 22, the protection device 32 performs control for turning off the semiconductor elements 27a to 27d of all the first power converting units 14 and the semiconductor elements 28a to 28h of the second power converting unit 15. Further, the protection device 32 performs control for turning on the discharge switch 11. According to these kinds of control, it is possible to attain effects same as the effects in the first embodiment.

Note that the temperature monitoring device 33 in the sixth embodiment can be applied to the power converter 100 in this embodiment. With this configuration, effects same as the effects in the sixth embodiment can be obtained.

Eighth Embodiment

Fig. 20 is an explanatory diagram showing a protecting operation of a power converter according to an eighth embodiment for carrying out the present invention. The power converter 100 according to this embodiment is different from the seventh embodiment in points explained below. In Fig. 20, discharge routes 23g of the primary filter capacitors 20 and the secondary filter capacitor 21 controlled by the protection device 32 are indicated by thick lines. Characters ON and OFF in the main switch 6, the short-circuit switches 7, the discharge switch 11, the semiconductor elements 27a to 27d of the first power converting units 14, and the semiconductor elements 28a to 28h of the second power converting unit 15 respectively represent the states of ON and OFF thereof. In Fig. 20, the primary filter capacitor 20 set as a protection target in the first power conversion cell 8a and the secondary filter capacitor 21 connected to the second power converting unit 15 and set as a protection target are represented as the protection targets 22. A sign 38 in Fig. 20 represents the second power converting unit 15 that performs control for transmitting electric power from the pairs of terminals 15-1 and 15-2 of the second input units to the pair of terminals 15-3 and 15-4 of the second output unit.

When an overvoltage occurs in the primary filter capacitor 20 and the secondary filter capacitor 21, the protection device 32 in this embodiment sets, as the protection targets 22, the primary filter capacitors 20 and the secondary filter capacitor 21 in which the overvoltage has occurred. The protection device 32 performs control for turning off all of the semiconductor elements 27a to 27d of the first power converting units 14, turning on the discharge switch 11, and turning off the main switch 6. Further, the protection device 32 performs control for turning on or off all the short-circuit switches 7 and keeps the states of ON or OFF of the respective switches. At this point, the second power converting unit 15 transmits electric power from the pairs of terminals 15-1 and 15-2 of all the second input units to the pair of terminals 15-3 and 15-4 of the second output unit such that electric charges of the primary filter capacitor 20 move to the secondary filter capacitor 21. The power converting unit 15 controls ON and OFF of the semiconductor elements 28a to 28h of the second power converting unit 15. As a result, as in the discharge routes 23g shown in Fig. 20, electric charges of the secondary filter capacitor 21 are quickly consumed by the lumped resistor 10 connected to the secondary filter capacitor 21 in parallel. The electric charges of the primary filter capacitor 20 are consumed by the distributed resistor 16 connected to the primary filter capacitor 20 in parallel. In addition, most of the electric charges are consumed by the lumped resistor 10.

In Fig. 20, an overvoltage has occurred in the primary filter capacitor 20 and the secondary filter capacitor 21. However, even when an overvoltage occurs in the secondary filter capacitor 21, by performing the control explained above, effects same as the effects in the second embodiment are attained.

When an overvoltage occurs in the primary filter capacitor 20 and the primary filter capacitor 20 is set as the protection target 22, by performing control for turning off the main switch 6, the protection device 32 can cut a charging route to the primary filter capacitor 20 set as the protection target 22, cause the distributed resistor 16 to consume electric charges, and suppress an overvoltage of the primary filter capacitor 20 set as the protection target 22.

Therefore, when an overvoltage occurs in at least one of the primary filter capacitor 20 and the secondary filter capacitor 21 and at least one of the primary filter capacitor 20 and the secondary filter capacitor 21 is set as the protection target 22, the protection device 32 performs control for turning off the main switch 6 and the semiconductor elements 27a to 27d of all the first power converting units 14. Further, the protection device 32 performs control for turning on the discharge switch 11. The protection device 32 performs control for switching ON and OFF of the semiconductor elements 28a to 28h of the second power converting unit 15 and transmitting electric power from the pairs of terminals 15-1 and 15-2 of all the second input units to the pair of terminals 15-3 and 15-4 of the second output unit. According to these kinds of control, it is possible to attain effects same as the effects in the seventh embodiment.

Further, according to the control by the protection device 32 in this embodiment, when an overvoltage occurs in the primary filter capacitor 20, it is possible to cause the lumped resistor 10 having a small resistance value to consume electric charges of the primary filter capacitor 20 set as the protection target 22. Therefore, it is possible to further reduce time required for discharge of the electric charges of the primary filter capacitor 20 than when the protection device 32 causes the distributed resistor 16 to consume the electric charges.

Note that the temperature monitoring device 33 in the sixth embodiment can also be applied to the power converter 100 in this embodiment. With this configuration, effects same as the effects in the sixth embodiment can be obtained. Ninth Embodiment

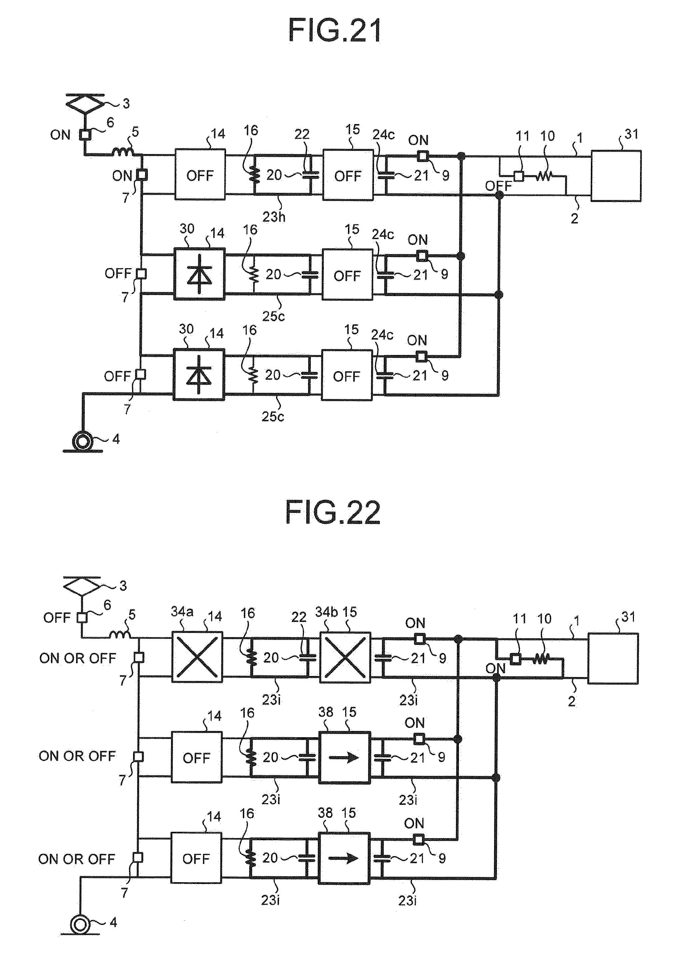

Fig. 21 is an explanatory diagram showing a protecting operation of a power converter according to a ninth embodiment for carrying out the present invention. The power converter 100 according to this embodiment is different from the first embodiment in points explained below. In Fig. 21, discharge routes 23h, residual charging units 24c, and charging routes 25c of the primary filter capacitors 20 and the secondary filter capacitors 21 controlled by the protection device 32 are indicated by thick lines. Characters ON and OFF in the main switch 6, the short-circuit switches 7, the separation switches 9, the discharge switch 11, the semiconductor elements 27a to 27d of the first power converting units 14, and the semiconductor elements 28a to 28h of the second power converting units 15 respectively represent the states of ON and OFF thereof. In Fig. 21, the primary filter capacitor 20 set as a protection target in the first power conversion cell 8a is represented as the protection target 22. A sign 30 in Fig. 21 represents a state in which the first power converting units 14 are operating as diode rectifiers.

In this embodiment, a method of, when an overvoltage occurs in the primary filter capacitor 20, after performing overvoltage suppression in a place where the overvoltage has occurred, quickly resuming power supply to the load 31 without requiring the initial charging explained in the second embodiment is presented. As an example, an operation performed when an overvoltage occurs in the primary filter capacitor 20 of the first power conversion cell 8a is explained.

First, the protection device 32 sets, as the protection target 22, the primary filter capacitor 20 in which an overvoltage has occurred. The protection device 32 turns off the semiconductor elements 27a to 27d of all the first power converting units 14 and the semiconductor elements 28a to 28h of the second power converting units 15. The protection device 32 turns on the main switch 6 and all the separation switches 9 and turns off the discharge switch 11. Further, the protection device 32 turns on the short-circuit switch 7 of the first power conversion cell 8a including the primary filter capacitor 20 set as the protection target 22 and keeps an OFF state of the short-circuit switches 7 of the remaining second and third power conversion sells 8b and 8c. As a result, as in the discharge routes 23h shown in Fig. 21, electric charges of the primary filter capacitor 20 set as the protection target 22 are consumed by the distributed resistor 16.

Therefore, when an overvoltage occurs in the primary filter capacitor 20 and the primary filter capacitor 20 is set as the protection target 22, by performing control for turning on the short-circuit switch 7 of the power conversion cell 8a including the primary filter capacitor 20 set as the protection target 22, the protection device 32 can cut a charging route to the primary filter capacitor 20 set as the protection target 22 and suppress an overvoltage of the primary filter capacitor 20 set as the protection target 22.

At this point, as in the residual charging units 24c shown in Fig. 21, because a current route is cut, the secondary filter capacitors 21 are kept charged. Charges of the primary filter capacitors 20 of the second and third power conversion cells 8b and 8c are gently discharged by the distributed resistors 16. On the other hand, as in the charging routes 25c shown in Fig. 21, because the main switch 6 and the short-circuit switch 7 of the first power conversion cell 8a are on, the first power converting units 14 of the second and third power conversion cells 8b and 8c operate as the diode rectifiers 30. Therefore, a sum of voltages of the primary filter capacitors 20 of the second and third power conversion cells 8b and 8c is maintained at a voltage having amplitude equal to the amplitude of the overhead wire voltage.

The primary filter capacitors 20 of the second and third power conversion cells 8b and 8c and all the secondary filter capacitors 21 are charged. Therefore, power supply to the load 31 can be resumed by the primary filter capacitors 20 not set as the protection target 22 and the secondary filter capacitors 21.

Therefore, when an overvoltage occurs in the primary filter capacitor 20 and the primary filter capacitor 20 is set as the protection target 22, the protection device 32 performs control for turning on the main switch 6 and all the separation switches 9. Further, the protection device 32 performs control for turning off the discharge switch 11. Further, the protection device 32 performs control for turning on the short-circuit switch 7 of the power conversion cell 8a including the primary filter capacitor 20 set as the projection target 22, that is, the short-circuit switch 7 connected to the first power converting unit 14 connected to the primary filter capacitor 20 set as the protection target 22 and turning off the remaining short-circuit switches 7. The protection device 32 performs control for turning off the semiconductor elements 27a to 27d of all the first power converting units 14 and the semiconductor elements 28a to 28h of all the second power converting units 15. A protecting operation of the power converter according to this embodiment is explained with reference to Fig. 10. In Fig. 10, first, the operation of the power converter 100 according to this embodiment is started. Thereafter, at step S201, the protection device 32 always monitors whether the protecting operation of the power converter 100 is necessary. When the protecting operation is necessary (Yes), the protection device 32 proceeds to the protection-target setting step S202. Note that, when the protecting operation is unnecessary (No), the protection device 32 repeats step S201. When an overvoltage occurs in the primary filter capacitor 20, the protection device 32 of the power converter 100 performs the protection-target setting step S202 and sets, as the protection target 22, the primary filter capacitor 20 in which the overvoltage has occurred. Subsequently, the protection device 32 performs the main-switch control step S203 and turns off the main switch 6. Subsequently, the protection device 32 performs the semiconductor-element control step S204 and turns off all of the semiconductor elements 27a to 27d and the semiconductor elements 28a to 28h. Subsequently, the protection device 32 performs the discharge-switch control step S205 and keeps the OFF state of the discharge switch 11. Finally, the protection device 32 performs the short-circuit-switch control step S206, turns on the short-circuit switch 7 connected to the first power converting unit 14 connected to the primary filter capacitor 20 set as the protection target 22, and turns off all the short-circuit switches 7 other than the short-circuit switch 7. Thereafter, the protection device 32 returns to step S201 and shifts to a state for monitoring whether the protecting operation of the power converter 100 is necessary.

In general, compared with a mechanical switch, time required for switching of ON and OFF states is short in the semiconductor elements. Therefore, the semiconductor-element control step S204 is performed most preferentially. In the protecting operation of the power converter 100 according to this embodiment, the immediately preceding ON or OFF states of the main switch 6 and the discharge switch 11 are kept. Therefore, the steps can be performed in any order. Therefore, by performing the protecting operation of the power converter 100 according to the flow explained above, the protection device 32 can more quickly suppress an overvoltage of the primary filter capacitor 20 set as the protection target 22.

Note that the protection device 32 can simultaneously perform the main-switch control step S203, the semiconductor-element control step S204, and the discharge-switch control step S205. Taking into account the time required for switching ON and OFF of the main switch 6, the discharge switch 11, and the short-circuit switches 7, the order of performing the main-switch control step S203, the semiconductor-element control step S204, the discharge-switch control step S205, and the short-circuit-switch control step S206 is not limited to the order shown in Fig. 10 and can be changed. Note that, during the protecting operation, the ON state of the separation switches 9 is kept.

According to these kinds of control, as in the first embodiment, it is possible to suppress an overvoltage of the primary filter capacitor 20 set as the protection target 22. According to this embodiment, when power supply to the load 31 is resumed, it is possible to make it unnecessary to perform initial charging of the primary filter capacitors 20 not set as the protection target 22 and the secondary filter capacitors 21. It is possible to reduce the time in which the power supply to the load 31 is interrupted. Note that, when the switching of ON and OFF of the semiconductor elements 27a to 27d and the semiconductor elements 28a to 28h becomes uncontrollable, the protection device 32 can turn off the semiconductor elements 27a to 27d of the first power converting units 14 excluding the semiconductor elements 27a to 27d, the switching of On and OFF of which has become uncontrollable, and turn off the semiconductor elements 28a to 28h of the second power converting units 15 excluding the semiconductor elements 28a to 28h, the switching of ON and OFF of which has become uncontrollable. According to these operations, it is possible to attain effects same as the effects explained above.

Tenth Embodiment

Fig. 22 is an explanatory diagram showing a protecting operation of a power converter according to a tenth embodiment for carrying out the present invention. The power converter 100 according to this embodiment is different from the first embodiment in points explained below. In Fig. 22, discharge routes 23i of the primary filter capacitors 20 and the secondary filter capacitors 21 controlled by the protection device 32 are indicated by thick lines. Characters ON and OFF in the main switch 6, the short-circuit switches 7, the separation switches 9, the discharge switch 11, the semiconductor elements 27a to 27d of the first power converting units 14, and the semiconductor elements 28a to 28h of the second power converting units 15 respectively represent the states of ON and OFF thereof. In Fig. 22, the primary filter capacitor 20 set as a protection target in the first power conversion cell 8a is represented as the protection target 22. A sign 38 in Fig. 22 represents the second power converting units 15 connected to the second and third power conversion cells 8b and 8c that perform control for transmitting electric power from the pairs of the terminals 15-1 and 15-2 of the second input units to the pairs of terminals 15-3 and 15-4 of the second output units. Signs 34a and 34b in Fig. 22 respectively represent the first power converting unit 14 including the semiconductor elements 27a to 27d, switching of ON and OFF of which has become uncontrollable, in the first power conversion cell 8a and the second power converting unit 15 including the semiconductor elements 28a to 28h, switching of ON and OFF of which has become uncontrollable, and connected to the first power conversion cell 8a.

In the second embodiment, the method of reducing the time required for the discharge of all the primary filter capacitors 20 and all the secondary filter capacitors 21 by controlling the second power converting units 15 to transmit electric power from the pairs of terminals 15-1 and 15-2 of the second input units to the pairs of terminals 15-3 and 15-4 of the second output units is explained. However, when the semiconductor elements 28a to 28h, the switching of ON and OFF of which has become uncontrollable, are present in the second power converting unit 15, the second power converting unit 15 cannot be controlled to transmit electric power from the pair of terminals 15-1 and 15-2 of the second input unit to the pair of terminals 15-4 and 15-4 of the second output unit.

Therefore, when the semiconductor elements, the switching of ON and OFF of which has become uncontrollable, are present, the protection device 32 of the power converter 100 according to this embodiment performs a protecting operation explained below. As an example, an operation performed when the switching of ON and OFF of the semiconductor elements 27a to 27d of the first power converting unit 14 in the first power conversion cell 8a and the semiconductor elements 28a to 28h of the second power converting unit 15 connected to the first power conversion cell 8a has become uncontrollable is explained.

When the switching of ON and OFF of one of the semiconductor elements 27a to 27d and the semiconductor elements 28a to 28h becomes uncontrollable, the protection device 32 sets, as the protection target 22, the primary filter capacitor 20 connected to the first power converting unit 14 including the semiconductor elements 27a to 27d, the switching of ON and OFF of which has become uncontrollable, or the primary filter capacitor 20 of the first power conversion cell 8a connected to the second power converting unit 15 including the semiconductor elements 28a to 28h, the switching of ON and OFF of which has become uncontrollable, that is, the primary filter capacitor 20 connected to the first power converting unit 14 connected to the second power converting unit 15 including the semiconductor elements 28a to 28h, the switching of ON and OFF of which has become uncontrollable. The protection device 32 performs control for turning off the main switch 6. The protection device 32 performs control for turning on the discharge switch 11 and all the separation switches 9. Further, the protection device 32 performs control for turning off the semiconductor elements 27a to 27d of all the first power converting units 14 excluding the semiconductor elements 27a to 27d, the switching of ON and OFF of which has become uncontrollable. Further, the protection device 32 performs control for switching ON and OFF of the semiconductor elements 28a to 28h of the second power converting unit 15 excluding the semiconductor elements 28a to 28h, the switching of ON and OFF of which has become uncontrollable, and transmitting electric power from the pairs of terminals 15-1 and 15-2 of the second input units to the pairs of terminals 15-3 and 15-4 of the second output units. The protecting operation of the power converter according to this embodiment is explained with reference to Fig. 10. In Fig. 10, first, the operation of the power converter 100 according to this embodiment is started. Thereafter, at step S201, the protection device 32 always monitors whether the protecting operation of the power converter 100 is necessary. When the protecting operation is necessary (Yes), the protection device 32 proceeds to the protection-target setting step S202. Note that, when the protecting operation is unnecessary (No), the protection device 32 repeats step S201. When the switching of ON and OFF of the semiconductor elements 27a to 27d and the semiconductor elements 28a to 28h becomes uncontrollable, the protection device 32 of the power converter 100 performs the protection-target setting step S202 and sets, as the protection target 22, the primary filter capacitor 20 connected to the first power converting unit 14 including the semiconductor elements 27a to 27d, the switching of ON and OFF of which has become uncontrollable, or the primary filter capacitor 20 connected to the first power converting unit 14 connected to the second power converting unit 15 including the semiconductor elements 28a to 28h, the switching of ON and OFF of which has become uncontrollable. Subsequently, the protection device 32 performs the main-switch control step S203 and turns off the main switch 6. Subsequently, the protection device 32 performs the semiconductor-element control step S204 and turns off the semiconductor elements 27a to 27d of all the first power converting units 14 excluding the semiconductor elements, the switching of ON and OFF of which has become uncontrollable. At the semiconductor-element control step S204, the protection device 32 also performs control for switching ON and OFF of the semiconductor elements 28a to 28h of all the second power converting units 15 excluding the semiconductor elements 28a to 28h, the switching of ON and OFF of which has become uncontrollable, and transmitting electric power from the pairs of terminals 15-1 and 15-2 of the second input units to the pairs of terminals 15-3 and 15-4 of the second output units. Subsequently, the protection device 32 performs the discharge-switch control step S205 and turns on the discharge switch 11. Finally, the protection device 32 performs the short-circuit-switch control step S206 and keeps the states of ON or OFF of all the short-circuit switches 7. Thereafter, the protection device 32 returns to step S201 and shifts to a state for monitoring whether the protecting operation of the power converter 100 is necessary.

In order to cut a current route from the power receiving terminal 3, the main-switch control step S203 is most preferentially performed. In general, compared with a mechanical switch, time required for switching of ON and OFF states is short in the semiconductor elements. Therefore, the semiconductor-element control step S204 is performed second most preferentially. Further, there is an effect of immediately reducing the voltage of the protection target 22 by turning on the discharge switch 11. Therefore, the discharge-switch control step S205 is third most preferentially performed. Therefore, by performing the protecting operation of the power converter 100 according to the flow explained above, the protection device 32 can more quickly suppress an overvoltage of the primary filter capacitor 20 set as the protection target 22.

Note that the protection device 32 can simultaneously perform the main-switch control step S203, the semiconductor-element control step S204, and the discharge-switch control step S205. Taking into account the time required for switching ON and OFF of the main switch 6, the discharge switch 11, and the short-circuit switches 7, the order of performing the main-switch control step S203, the semiconductor-element control step S204, the discharge-switch control step S205, and the short-circuit-switch control step S206 is not limited to the order shown in Fig. 10 and can be changed. When the states of ON and OFF before the start of the protecting operation can be kept even during the protecting operation, the short-circuit-switch control step S206 does not have to be performed. Note that, during the protecting operation, the ON state of the separation switches 9 is kept.

According to this embodiment, by performing the control for turning off the main switch 6, as in the first embodiment, it is possible to suppress an overvoltage of the primary filter capacitor 20 set as the protection target 22. By performing the control for switching ON and OFF of the semiconductor elements 28a to 28h of the second power converting unit 15 excluding the semiconductor elements 28a to 28h, the switching of ON and OFF of which has become uncontrollable, and transmitting electric power from the pairs of terminals 15-1 and 15-2 of the second input units to the pairs of terminals 15-3 and 15-4 of the second output units, it is possible to attain effects same as the effects in the second embodiment.

In Fig. 22, the switching of ON and OFF of both of the semiconductor elements 27a to 27d of the first power converting unit 14 in the first power conversion cell 8a and the semiconductor elements 28a to 28h of the second power converting unit 15 is uncontrollable. However, even when the switching of ON and OFF of any one semiconductor elements becomes uncontrollable, the same effects are attained if all the semiconductor elements excluding the semiconductor elements, the switching of ON and OFF of which has become uncontrollable, are turned off.

Eleventh Embodiment

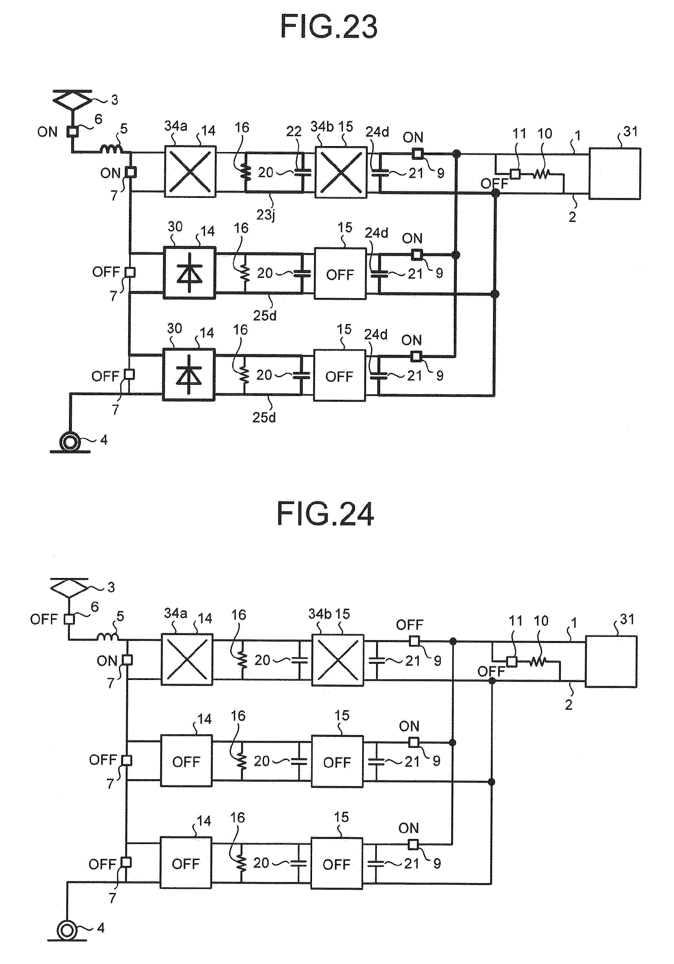

Fig. 23 is an explanatory diagram showing a protecting operation of a power converter according to an eleventh embodiment for carrying out the present invention. The power converter 100 according to this embodiment is different from the first embodiment in points explained below. In Fig. 23, a charging route 23j, residual charging unit 24d, and charging routes 25d for the primary filter capacitors 20 and the secondary filter capacitors 21 in the case of the control by the protection device 32 are indicated by thick lines. Characters ON and OFF in the main switch 6, the short-circuit switches 7, the separation switches 9, the discharge switch 11, the semiconductor elements 27a to 27d of the first power converting units 14, and the semiconductor elements 28a to 28h of the second power converting units 15 respectively represent the states of ON and OFF thereof. In Fig. 23, the primary filter capacitor 20 set as a protection target in the first power conversion cell 8a is represented as the protection target 22. A sign 30 in Fig. 23 represents a state in which the first power converting units 14 are operating as diode rectifiers. Signs 34a and 34b in Fig. 23 respectively represent the first power converting unit 14 including the semiconductor elements 27a to 27d, the switching of ON and OFF of which has become uncontrollable, in the first power conversion cell 8a and the second power converting unit 15 including the semiconductor elements 28a to 28h, the switching of ON and OFF of which has become uncontrollable, and connected to the first power conversion cell 8a.

When the semiconductor elements, the switching of ON and OFF of which has become uncontrollable, are present, the protection device 32 in this embodiment performs a protecting operation explained below. As an example, an operation performed when the switching of ON and OFF of the semiconductor elements 27a to 27d of the first power converting unit 14 in the first power conversion cell 8a and the semiconductor elements 28a to 28h of the second power converting unit 15 connected to the first power conversion cell 8a becomes uncontrollable is explained.

When the switching of ON and OFF of the semiconductor elements 27a to 27d and of the semiconductor elements 28a to 28h becomes uncontrollable, the protection device 32 in this embodiment sets, as the protection target 22, the primary filter capacitor 20 connected to the first power converting unit 14 including the semiconductor elements 27a to 27d, the switching of ON and OFF of which has become uncontrollable, or the primary filter capacitor 20 of the first power conversion cell 8a connected to the second power converting unit 15 including the semiconductor elements 28a to 28h, the switching of ON and OFF of which has become uncontrollable, that is, the primary filter capacitor 20 connected to the first power converting unit 14 connected to the second power converting unit 15 including the semiconductor elements 28a to 28h, the switching of ON and OFF of which has become uncontrollable. The protection device 32 turns off the semiconductor elements 27a to 27d of all the first power converting units 14 excluding the semiconductor elements 27a to 27d, the switching of ON and OFF of which has become uncontrollable, and the semiconductor elements 28a to 28h of all the second power converting units 15 excluding the semiconductor elements 28a to 28h, the switching of ON and OFF of which has become uncontrollable. The protection device 32 turns on the main switch 6 and all the separation switches 9 and turns off the discharge switch 11. Further, the protection device 32 turns on the short-circuit switch 7 of the first power conversion cell 8a including the primary filter capacitor 20 set as the protection target 22 and keeps the state of OFF of the short-circuit switches 7 of the remaining second and third power conversion cells 8b and 8c. A protecting operation of the power converter according to this embodiment is explained with reference to Fig. 10. In Fig. 10, first, the operation of the power converter 100 according to this embodiment is started. Thereafter, at step S201, the protection device 32 always monitors whether the protecting operation of the power converter 100 is necessary. When the protecting operation is necessary (Yes), the protection device 32 proceeds to the protection-target setting step S202. Note that, when the protecting operation is unnecessary (No), the protection device 32 repeats step S201. When the switching of ON and OFF of the semiconductor elements 27a to 27d and the semiconductor elements 28a to 28h becomes uncontrollable, the protection device 32 of the power converter 100 performs the protection-target setting step S202 and sets, as the protection target 22, the primary filter capacitor 20 connected to the first power converting unit 14 including the semiconductor elements 27a to 27d, the switching of ON and OFF of which has become uncontrollable, or the primary filter capacitor 20 connected to the first power converting unit 14 connected to the second power converting unit 15 including the semiconductor elements 28a to 28h, the switching of ON and OFF of which has become uncontrollable. Subsequently, the protection device 32 performs the main-switch control step S203 and keeps the ON state of the main switch 6. Subsequently, the protection device 32 performs the semiconductor-element control step S204 and turns off the semiconductor elements 27a to 27d of all the first power converting units 14 and the semiconductor elements 28a to 28h of all the second power converting units 15 excluding the semiconductor elements, the switching of ON and OFF of which has become uncontrollable. Subsequently, the protection device 32 performs the discharge-switch control step S205 and keeps the OFF state of the discharge switch 11. Finally, the protection device 32 performs the short-circuit-switch control step S206, turns on the short-circuit switch 7 connected to the first power converting unit 14 connected to the primary filter capacitor 20 set as the protection target 22, and turns off the other all short-circuit switches 7. Thereafter, the protection device 32 returns to step S201 and shifts to a state for monitoring whether the protecting operation of the power converter 100 is necessary.

In general, compared with a mechanical switch, the time required for switching of ON and OFF states is short in the semiconductor elements. Therefore, the semiconductor-element control step S204 is performed most preferentially. In the protecting operation of the power converter 100 according to this embodiment, the immediately preceding ON or OFF states of the main switch 6 and the discharge switch 11 are kept. Therefore, the steps can be performed in any order. Therefore, by performing the protecting operation of the power converter 100 according to the flow explained above, the protection device 32 can more quickly suppress an overvoltage of the primary filter capacitor 20 set as the protection target 22.

Note that the protection device 32 can simultaneously perform the main-switch control step S203, the semiconductor-element control step S204, and the discharge-switch control step S205. Taking into account the time required for switching ON and OFF of the main switch 6, the discharge switch 11, and the short-circuit switches 7, the order of performing the main-switch control step S203, the semiconductor-element control step S204, the discharge-switch control step S205, and the short-circuit-switch control step S206 is not limited to the order shown in Fig. 10 and can be changed. According to this embodiment, by performing control for turning on the short-circuit switch 7 of the first power conversion cell 8a including the primary filter capacitor 20 set as the protection target 22, that is, the short-circuit switch 7 connected to the first power converting unit 14 connected to the primary filter capacitor 20 set as the protection target 22, as in the first embodiment, it is possible to suppress an overvoltage of the primary filter capacitor 20 set as the protection target 22. Note that, during the protecting operation, the ON state of the separation switch 9 is kept.

According to this embodiment, when the semiconductor elements, the switching of ON and OFF of which has become uncontrollable, are present, it is possible to prevent an overvoltage from occurring in the primary filter capacitor 20 set as the protection target 22. It is possible to prevent the primary filter capacitor 20 and the secondary filter capacitor 21 from being short-circuited by the semiconductor elements, the switching of ON and OFF of which has become uncontrollable, and the remaining semiconductor elements.

According to this embodiment, when power supply to the load 31 is resumed, it is possible to make it unnecessary to perform initial charging of the primary filter capacitors 20 not set as the protection target 22 and the secondary filter capacitors 21. It is possible to reduce time in which the power supply to the load 31 is interrupted.

In Fig. 23, the switching of ON and OFF of both of the semiconductor elements 27a to 27d of the first power converting unit 14 in the first power conversion cell 8a and the semiconductor elements 28a to 28h of the second power converting unit 15 is uncontrollable. However, even when the switching of ON and OFF of one of the semiconductor elements 27a to 27d and the semiconductor elements 28a to 28h becomes uncontrollable, if all the semiconductor elements excluding the semiconductor elements, the switching of ON and OFF of which has become uncontrollable, are turned off, the same effects are attained.

Note that, when the protecting operation is performed again after the protecting operation is carried out in Fig. 10, a protecting operation different from the carried-out protecting operation among the protecting operations explained in the first, second, fourth, seventh, ninth, tenth, and eleventh embodiments can be performed according to the protection target 22.

Twelfth Embodiment

Fig. 24 is an explanatory diagram showing a protecting operation of a power converter according to a twelfth embodiment for carrying out the present invention. In Fig. 24, characters ON and OFF in the main switch 6, the short-circuit switches 7, the separation switches 9, the discharge switch 11, the semiconductor elements 27a to 27d of the first power converting units 14, and the semiconductor elements 28a to 28h of the second power converting units 15 respectively represent states of ON and OFF thereof. Signs 34a and 34b in Fig. 24 respectively represent the first power converting unit 14 including the semiconductor elements 27a to 27d, the switching of ON and OFF of which has become uncontrollable, in the first power conversion cell 8a and the second power converting unit 15 including the semiconductor elements 28a to 28h, the switching of ON and OFF of which has become uncontrollable, and connected to the first power conversion cell 8a.

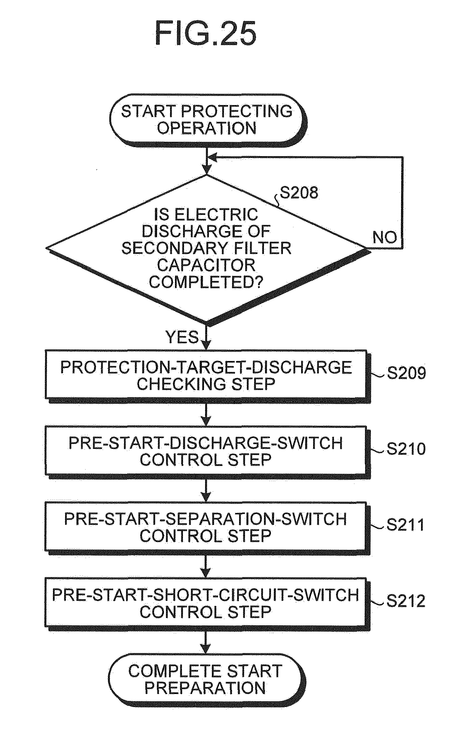

In this embodiment, a procedure for resuming the supply of electric power to the load 31 after the power converter 100 stops according to the procedure explained in the fourth embodiment or the tenth embodiment is shown in Fig. 25. Fig. 25 is a flowchart for explaining the protecting operation of the power converter according to this embodiment. In Fig. 25, first, a protecting operation of the power converter 100 according to this embodiment is started. When the switching of ON and OFF of the semiconductor elements 27a to 27d and 28a to 28h becomes uncontrollable and the discharge switch 11 is turned on, the protection device 32 of the power converter 100 acquires, from a voltage sensor (not shown in the figure), a voltage value of the secondary filter capacitor 21. At step S208, the protection device 32 always monitors whether electric discharge of the secondary filter capacitor 21 of the power converter 100 is completed. When the electric discharge is completed (Yes), the protection device 32 proceeds to a protection-target-discharge checking step S209. Note that, when the electric discharge is not completed (No), the protection device 32 repeats step S208. When the voltage value of the secondary filter capacitor 21 is smaller than a predetermined value, the protection device 32 performs the protection-target-discharge checking step S209 for excluding all the primary filter capacitors 20 and all the secondary filter capacitors 21 from the protection targets 22. Subsequently, the protection device 32 performs a pre-start-discharge-switch control step S210 and turns off the discharge switch 11. Subsequently, the protection device 32 performs a pre-start-separation-switch control step S211 and turns off the separation switch 9 connected to the second power converting unit 15 connected to the first power converting unit 14 including the semiconductor elements 27a to 27d, the switching of ON and OFF of which has become uncontrollable, or the separation switch 9 connected to the second power converting unit 15 including the semiconductor elements 28a and 28h, the switching of ON and OFF of which has become uncontrollable, and turns on the remaining all separation switches 9. Subsequently, the protection device 32 performs a pre-start-short-circuit-switch control step S212 and turns on the short-circuit switch 7 connected to the first power converting unit 14 including the semiconductor elements 27a to 27d, the switching of ON and OFF of which has become uncontrollable, or the short-circuit switch 7 connected to the first power converting unit 14 connected to the second power converting unit 15 including the semiconductor elements 28a to 28h, the switching of ON and OFF of which has become uncontrollable, and turns off the remaining all short-circuit switches 7. Thereafter, start preparation for the power converter 100 is completed.

According to the control explained above, it is possible to cut a charging route to the semiconductor elements 27a to 27d and 28a to 28h, the switching of ON and OFF of which has become uncontrollable. If the main switch 6 is turned on to initially charge the first filter capacitor 20 and the secondary filter capacitor 21 (an initial charging circuit is not shown in the figure) in this state, it is possible to resume the supply of electric power to the load 31.

Note that the protection device 32 can simultaneously perform the pre-start-discharge-switch control step S210, the pre-start-separation-switch control step S211, and the pre-start-short-circuit-switch control step S212. The order of performing the pre-start-discharge-switch control step S210, the pre-start-separation-switch control step S211, and the pre-start-short-circuit-switch control step S212 is not limited to the order shown in Fig. 25 and can be changed. Even when the secondary filter capacitor 21 is not the protection target 22, the primary filter capacitor 20 only has to be excluded from the protection target 22.

The main switch 6 only has to keep the OFF state at the protection-target-discharge checking step S209.

The power converter configured as explained above performs, when the primary filter capacitor is set as the protection target by the protection device, control for causing distributed resistors to consume electric charges of the primary filter capacitor set as the protection target. Therefore, it is possible to suppress an overvoltage of the primary filter capacitors connected to the input unit of the DC/DC converter in parallel.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A power converter comprising:

   N (N is an integer equal to or larger than 2) first power converting units (14) each including first input units (14-1, 14-2) to which alternating-current power is input, first output units from which direct-current power is output, and a plurality of semiconductor elements (27a to 27d) that perform switching, the first power converting unit converting the alternating-current power into the direct-current power;

N short-circuit switches (7) connected to the respective first input units in parallel and switch short circuit and open circuit;

N distributed resistors (16) connected to the respective first output units (14-3, 14-4) in parallel;

N primary filter capacitors (20) connected to the respective first output units (14-3, 14-4) in parallel;

a power conversion body (12) including N power-conversion-body input ends (12-1, 12-2) connected to the respective first output units (14-3, 14-4), the direct-current power being input to the power-conversion-body input ends (12-1, 12-2), and a power-conversion-body output end (12-3, 12-4) from which the direct-current power is output, the power conversion body converting the direct-current power into direct-current power; and

a main switch (6) that switches supply and interruption of electric power, wherein

the N first input units (14-1, 14-2) are connected in series via the main switch, and

the power converter (100) further comprises a protection device (32) that sets the primary filter capacitor (20) as a protection target on the basis of abnormality of the primary filter capacitor (20) or the semiconductor elements and perform control for turning on the main switch and the short-circuit switch (7) connected to the first power converting unit (14) connected to the primary filter capacitor (20) set as the protection target, or turning off the main switch.

2. The power converter according to claim 1, further comprising:

a lumped resistor (10); and

a discharging switch (11) configured to switch short circuit and open circuit, wherein

the power conversion body (12) further includes:

N separation switches (9) that switch short circuit and open circuit;

N second power converting units (15) each including a second input unit (15-1, 15-2) which is connected to the corresponding power-conversion-body input end (12-1, 12-2), and to which direct-current power is input, a second output unit (15-3, 15-4) which is connected to the power-conversion-body output end (12-3, 12-4) via the separation switches (9), and to which the direct-current power is output, and a plurality of semiconductor elements (28a to 28d) that perform switching, the N second power converting units (15) converting the direct-current power into direct-current power; and

N secondary filter capacitors (21) connected to the respective second output units (15-3, 15-4) one by one in parallel,

a series connection body (13) to which the lumped resistor (10) and the discharge switch (11) are connected in series to each other is connected to the power-conversion-body output end (12-3, 12-4) in parallel, and

the protection device (32) sets the secondary filter capacitor (21) as the protection target on the basis of abnormality of the secondary filter capacitor (21) or the semiconductor elements (28a to 28d) and performs control for turning on the discharge switch (11) and all the separation switches (9).

3. The power converter according to claim 1, further comprising:

a lumped resistor (10); and

a discharging switch (11) that switches short circuit and open circuit, wherein

the power conversion body (12) further includes:

one second power converting unit (15) including N second input units (15-1, 15-2) which are connected to the corresponding power-conversion-body input ends (12-1, 12-2), and to which direct-current power is input, a second output unit (15-3, 15-4) which is connected to the power-conversion-body output end (12-3, 12-4), to which the direct-current power is output, and a plurality of semiconductor elements (28a to 28d) that perform switching, the one second power converting unit (15) converting the direct-current power into direct-current power; and

one secondary filter capacitor (21) connected to the second output unit (15-3, 15-4) in parallel,

a series connection body (13) to which the lumped resistor (10) and the discharge switch (11) are connected in series to each other is connected to the power-conversion-body output end (12-3, 12-4) in parallel, and

the protection device (32) sets at least one of the primary filter capacitor (20) and the secondary filter capacitor (21) as the protection target on the basis of abnormality of the primary filter capacitor (20) or the secondary filter capacitor (21) and performs control for turning off the main switch (6) and turning on the discharge switch (11).

4. The power converter according to claim 2, wherein, when at least one of the primary filter capacitor (20) band the secondary filter capacitor (21) is set as the protection target, the protection device (32) performs control for turning off the main switch (6), the semiconductor elements (27a to 27d) of the first power converting units (14) excluding the semiconductor elements, switching of ON and OFF of which has become uncontrollable, and the semiconductor elements (28a to 28d) of the second power converting unit (15) excluding the semiconductor elements, the switching of ON and OFF of which has become uncontrollable, and turning on the discharge switch (11) and all the separation switches (9).

5. The power converter according to claim 3, wherein, when at least one of the primary filter capacitor (20) and the secondary filter capacitor (21) is set as the protection target, the protection device (32) performs control for turning off the semiconductor elements (27a to 27d) of all the first power converting units (14) and the semiconductor elements (27a to 27d) of all the second power converting units (15).

6. The power converter according to claim 2, wherein, when at least one of the primary filter capacitor (20) and the secondary filter capacitor (21) is set as the protection target, the protection device (32) performs control for turning off the semiconductor elements (27a to 27d) of the first power converting unit (14) excluding the semiconductor elements, the switching of ON and OFF of which has become uncontrollable, turning on the discharge switch (11) and all the separation switches (9), and switches ON and OFF of the semiconductor elements (28a to 28d) of the second power converting unit (15) excluding the semiconductor elements, the switching of ON and OFF of which has become uncontrollable, to transmit electric power from the second input unit (15-1, 15-2) to the second output unit (15-3, 15-4).

7. The power converter according to claim 3, wherein, when at least one of the primary filter capacitor (20) and the secondary filter capacitor (21) is set as the protection target, the protection device (32) performs control for turning off the semiconductor elements (27a to 27d) of all the first power converting units (14) and switches ON and OFF of the semiconductor elements of the second power converting unit to transmit electric power from all the second input units (15-1, 15-2) to the second output unit (15-3, 15-4).

8. The power converter according to claim 2, wherein, when the primary filter capacitor (20) is set as the protection target and the secondary filter capacitor (21) is not set as the protection target, the protection device (32) performs control for turning on the main switch (6) and all the separation switches (9), turning off the discharge switch (11), turning on the short-circuit switch (7) connected to the first power converting unit (14) connected to the primary filter capacitor (20) set as the protection target and turning off the remaining short-circuit switches (7), and turning off the semiconductor elements (27a to 27d) of the first power converting units (14) excluding the semiconductor elements, the switching of ON and OFF of which has become uncontrollable, and the semiconductor elements (28a to 28d) of the second power converting unit (15) excluding the semiconductor elements, the switching of ON and OFF of which has become uncontrollable.

9. The power converter according to any one of claims 4, 6, or 8, wherein, when the switching of ON and OFF of the semiconductor elements becomes uncontrollable, the protection device (32) performs control for setting, as the protection target, the primary filter capacitor (20) connected to the first power converting unit (14) including the semiconductor elements (27a to 27d), the switching of ON and OFF of which has become uncontrollable, or the primary filter capacitor (21) connected to the first power converting unit (14) connected to the second power converting unit (15) including the semiconductor elements (28a to 28d), the switching of ON and OFF of which has become uncontrollable.

10. A control method in a power converter including:

N (N is an integer equal to or larger than 2) first power converting units (14) each including first input units (14-1, 14-2) to which alternating-current power is input, first output units from which direct-current power is output, and a plurality of semiconductor elements (27a to 27d) that perform switching, the first power converting unit converting the alternating-current power into the direct-current power;

N short-circuit switches (7) connected to the respective first input units in parallel and switch short circuit and open circuit;

N distributed resistors (16) connected to the respective first output units (14-3, 14-4) in parallel;

N primary filter capacitors (20) connected to the respective first output units (14-3, 14-4) in parallel;

a power conversion body (12) including N power-conversion-body input ends (12-1, 12-2) connected to the respective first output units (14-3, 14-4), the direct-current power being input to the power-conversion-body input ends (12-1, 12-2), and a power-conversion-body output end (12-3, 12-4) from which the direct-current power is output, the power conversion body converting the direct-current power into direct-current power; and

a main switch (6) that switches supply and interruption of electric power, wherein

the N first input units (14) are connected in series via the main switch (6),

a protection device (32) performs a protection-target setting step for setting at least one of the primary filter capacitor (20) and the secondary filter capacitor (21) as a protection target on the basis of abnormality of the primary filter capacitor (20), the secondary filter capacitor (21), or the semiconductor elements (27a to 27d), and

when the protection-target setting step is performed, the protection device further performs:

a main-switch control step for turning on or off the main switch (6); and

a short-circuit-switch control step for, when turning on the main switch in the main-switch control step, turning on the short-circuit switch (7) connected to the first power converting unit (14) connected to the primary filter capacitor (20) set as the protection target.

11. The control method according to claim 10, wherein
the power converter further includes:

a lumped resistor (10); and
a discharging switch (11) configured to switch short circuit and open circuit, wherein
the power conversion body (12) further includes:

N separation switches (9) that switch short circuit and open circuit;
N second power converting units (15) each including a second input unit (15-1, 15-2) which is connected to the corresponding power-conversion-body input end (12-1, 12-2), and to which direct-current power is input, a second output unit (15-3, 15-4) which is connected to the power-conversion-body output end (12-3, 12-4) via the separation switches (9), and to which the direct-current power is output, and a plurality of semiconductor elements (28a to 28d) that perform switching, the N second power converting units (15) converting the direct-current power into direct-current power; and

N secondary filter capacitors (21) connected to the respective second output units (15-3, 15-4) one by one in parallel,
a series connection body (13) to which the lumped resistor (10) and the discharge switch (11) are connected in series to each other is connected to the power-conversion-body output end (12-3, 12-4) in parallel, and
when the protection-target setting step is performed,
the protection device (32) further performs:

a semiconductor-element control step for turning off the semiconductor elements (27a to 27d) of the first power converting unit (14) excluding the semiconductor elements, the switching of ON and OFF of which has become uncontrollable, and the semiconductor elements (28a to 28d) of the second power converting unit (15) excluding the semiconductor elements, the switching of ON and OFF of which has become uncontrollable; and
a discharge-switch control step for turning on the discharge switch (11), and
in the main-switch control step, the protection device (32) turns off the main switch (6).

12. The control method according to claim 10, wherein
the power converter further includes:

a lumped resistor (10); and
a discharging switch (11) that switches short circuit and open circuit,
the power conversion body (12) further includes:

N separation switches (9) that switch short circuit and open circuit;
N second power converting units (15) each including a second input unit (15-1, 15-2) which is connected to the corresponding power-conversion-body input end (12-1, 12-2), and to which the direct-current power is input, second output unit (15-3, 15-4) which is connected to the power-conversion-body output end (12-3, 12-4) via the separation switches (9), and to which the direct-current power is output, and a plurality of semiconductor elements (28a to 28d) that perform switching, the N second power converting unit (15) converting the direct-current power into direct-current power; and

N secondary filter capacitors (21) connected to the respective second output units (15-3, 15-4) one by one in parallel,
a series connection body (13) to which the lumped resistor (10) and the discharge switch (11) are connected in series to each other is connected to the power-conversion-body output end (12-3, 12-4) in parallel,
when the protection-target setting step is performed,
the protection device further performs:

a semiconductor-element control step for turning off the semiconductor elements (27a to 27d) of the first power converting unit (14) excluding the semiconductor elements, the switching of ON and OFF of which has become uncontrollable, and switching ON and OFF of the semiconductor elements (28a to 28d) of the second power converting unit (15) excluding the semiconductor elements, the switching of ON and OFF of which has become uncontrollable, to transmit electric power from the second input unit (15-1, 15-2) to the second output unit (15-3, 15-4); and
a discharge-switch control step for turning on the discharge switch (11), and
in the main-switch control step, the protection device turns off the main switch (6).

13. The control method according to claim 10, wherein
the power converter further includes:

a lumped resistor (10); and
a discharging switch (11) configured to switch short circuit and open circuit, wherein
the power conversion body (12) further includes:

N separation switches (9) that switch short circuit and open circuit;
N second power converting units (15) each including a second input unit (15-1, 15-2) which is connected to the corresponding power-conversion-body input end (12-1, 12-2), and to which direct-current power is input, a second output unit (15-3, 15-4) which is connected to the power-conversion-body output end (12-3, 12-4) via the separation switches (9), and to which the direct-current power is output, and a plurality of semiconductor elements (28a to 28d) that perform switching, the N second power converting units (15) converting the direct-current power into direct-current power; and

N secondary filter capacitors (21) connected to the respective second output units (15-3, 15-4) one by one in parallel,
a series connection body (13) to which the lumped resistor (10) and the discharge switch (11) are connected in series to each other is connected to the power-conversion-body output end (12-3, 12-4) in parallel,
a series connection body to which the lumped resistor and the discharge switch are connected in series to each other is connected to the power-conversion-body output ends in parallel,
when the protection-target setting step is performed and the secondary filter capacitor (21) is not set as the protection target,
the protection device further performs:

a semiconductor-element control step for turning off the semiconductor elements (27a to 27d) of the first power converting unit (14) excluding the semiconductor elements, the switching of ON and OFF of which has become uncontrollable, and the semiconductor elements (28a to 28d) of the second power converting unit (15) excluding the semiconductor elements, the switching of ON and OFF of which has become uncontrollable; and
a discharge-switch control step for turning off the discharge switch (11),
in the main-switch control step, the protection device (32) turns on the main switch (6), and
in the short-circuit-switch control step, the protection device turns on the short-circuit switch (7) connected to the first power converting unit (14) connected to the primary filter capacitor (20) set as the protection target and turns off the remaining short-circuit switches.

14. The control method according to any one of claims 11, 12, or 13, wherein, in the protection-target setting step, the protection device sets, on the basis of abnormality of the semiconductor elements (27a to 27d), the switching of ON and OFF of which has become uncontrollable, as the protection target, the primary filter capacitor (20) connected to the first power converting unit (14) including the semiconductor elements, the switching of ON and OFF of which has become uncontrollable, or the primary filter capacitor (20) connected to the first power converting unit (14) connected to the second power converting unit (15) including the semiconductor elements (28a to 28d), the switching of ON and OFF of which has become uncontrollable.

15. The control method according to claim 14, wherein
when a voltage value of the secondary filter capacitor (21) is equal to or smaller than a value set in advance, the protection device (32) further performs a protection-target-discharge checking step for excluding the primary filter capacitor (20) set as the protection target in the protection-target setting step from the protection target, and
when the protection-target-discharge checking step is performed, the protection device further performs:

a pre-start-discharge-switch control step for turning off the discharge switch (11);
a pre-start-short-circuit-switch control step for turning on the short-circuit switch (7) connected to the first power converting unit (14) including the semiconductor elements (27a to 27d), the switching of ON and OFF of which has become uncontrollable, or turning on of the short-circuit switch (7) connected to the first power converting unit (14) connected to the second power converting unit (15) including the semiconductor elements (28a to 28d), the switching of ON and OFF of which has become uncontrollable, and turning off the remaining short-circuit switches (7); and
a pre-start-separation-switch control step for turning off the separation switch (9) connected to the second power converting unit (15) connected to the first power converting unit (14) including the semiconductor elements (27a to 27d), the switching of ON and OFF of which has become uncontrollable, or turning off the separation switch (9) connected to the second power converting unit (15) including the semiconductor elements (28a to 28d), the switching of ON and OFF of which has become uncontrollable, and turning on the remaining separation switches.

FIG.1

# FIG.2

# FIG.3

# FIG.4

# FIG.5

# FIG.6

# FIG.7

FIG.8

# FIG.9

# FIG.10

```
            ╭─────────────╮
            │    START    │
            │  OPERATION  │
            ╰─────────────╯
                   │
                   ▼
              ╱─────────╲          S201
            ╱  IS PROTECTING ╲
          ╱    OPERATION      ╲────── NO
            ╲  NECESSARY?    ╱
              ╲─────────╱
                   │
                 YES
                   ▼
     ┌─────────────────────────────┐
     │ PROTECTION-TARGET SETTING   │── S202
     │           STEP              │
     └─────────────────────────────┘
                   │
                   ▼
     ┌─────────────────────────────┐
     │  MAIN-SWITCH CONTROL STEP   │── S203
     └─────────────────────────────┘
                   │
                   ▼
     ┌─────────────────────────────┐
     │    SEMICONDUCTOR-ELEMENT    │── S204
     │        CONTROL STEP         │
     └─────────────────────────────┘
                   │
                   ▼
     ┌─────────────────────────────┐
     │  DISCHARGE-SWITCH CONTROL   │── S205
     │            STEP             │
     └─────────────────────────────┘
                   │
                   ▼
     ┌─────────────────────────────┐
     │     SHORT-CIRCUIT-SWITCH    │── S206
     │        CONTROL STEP         │
     └─────────────────────────────┘
```

# FIG.11

# FIG.12

# FIG.13

# FIG.14

# FIG.15

FIG.16

FIG.17

# FIG.18

# FIG.19

# FIG.20

# FIG.21

# FIG.22

# FIG.23

# FIG.24

49

# FIG.25

```
        ┌─────────────────────┐
        │  START PROTECTING   │
        │     OPERATION       │
        └─────────────────────┘
                  │
                  ▼
            ╱─────────────╲          S208
          ╱   IS ELECTRIC   ╲
         ╱   DISCHARGE OF     ╲    NO
        ╱  SECONDARY FILTER    ╲──────────┐
         ╲    CAPACITOR       ╱           │
          ╲   COMPLETED?    ╱             │
            ╲─────────────╱               │
                  │ YES                   │
                  ▼                       │
    ┌─────────────────────────────┐       │
    │ PROTECTION-TARGET-DISCHARGE │  S209 │
    │       CHECKING STEP         │       │
    └─────────────────────────────┘       │
                  │                       │
                  ▼                       │
    ┌─────────────────────────────┐       │
    │ PRE-START-DISCHARGE-SWITCH  │  S210 │
    │       CONTROL STEP          │       │
    └─────────────────────────────┘       │
                  │                       │
                  ▼                       │
    ┌─────────────────────────────┐       │
    │ PRE-START-SEPARATION-SWITCH │  S211 │
    │       CONTROL STEP          │       │
    └─────────────────────────────┘       │
                  │                       │
                  ▼                       │
    ┌──────────────────────────────┐      │
    │ PRE-START-SHORT-CIRCUIT-SWITCH│ S212│
    │       CONTROL STEP           │      │
    └──────────────────────────────┘      │
                  │                       │
                  ▼                       │
        ┌─────────────────────┐           │
        │   COMPLETE START    │           │
        │    PREPARATION      │           │
        └─────────────────────┘           │
```

Europäisches
Patentamt

European
Patent Office

Office européen
des brevets

# EUROPEAN SEARCH REPORT

Application Number

EP 15 18 5615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2013/079300 A2 (SIEMENS AG [DE]) 6 June 2013 (2013-06-06) * figure 1 * * figure 3 * * page 1, line 35 - page 2, line 35 * * page 5, line 6 - line 21 * ----- | 1-12 | INV. H02M7/217 H02M1/32 H02M1/00 |
| Y | EP 2 608 382 A1 (SIEMENS AG [DE]) 26 June 2013 (2013-06-26) * figure 2 * * paragraph [0040] - paragraph [0046] * ----- | 1-12 | |
| A | EP 2 608 396 A1 (SIEMENS AG [DE]) 26 June 2013 (2013-06-26) * figures 1-2 * * paragraph [0053] * ----- | 1-15 | |
| A | EP 0 820 893 A2 (ABB DAIMLER BENZ TRANSP [DE]) 28 January 1998 (1998-01-28) * figure 6 * * page 4, line 19 - line 32 * ----- | 1-15 | |

TECHNICAL FIELDS
SEARCHED (IPC)

H02M

The present search report has been drawn up for all claims

| Place of search | Date of completion of the search | Examiner |
|---|---|---|
| The Hague | 24 February 2016 | Riehl, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 18 5615

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2016

| Patent document cited in search report | | Publication date | Patent family member(s) | | Publication date |
|---|---|---|---|---|---|
| WO 2013079300 | A2 | 06-06-2013 | DE 102011087283 | A1 | 29-05-2013 |
| | | | EP 2786477 | A2 | 08-10-2014 |
| | | | WO 2013079300 | A2 | 06-06-2013 |
| EP 2608382 | A1 | 26-06-2013 | EP 2608382 | A1 | 26-06-2013 |
| | | | WO 2013092032 | A2 | 27-06-2013 |
| EP 2608396 | A1 | 26-06-2013 | EP 2608396 | A1 | 26-06-2013 |
| | | | WO 2013092053 | A1 | 27-06-2013 |
| EP 0820893 | A2 | 28-01-1998 | AT 236807 | T | 15-04-2003 |
| | | | CN 1172746 | A | 11-02-1998 |
| | | | DE 19630284 | A1 | 29-01-1998 |
| | | | EP 0820893 | A2 | 28-01-1998 |
| | | | JP H10234186 | A | 02-09-1998 |

EPO FORM P0459

For more details about this annex : see Official Journal of the European Patent Office, No. 12/82

**EP 3 002 864 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012098107 A
- JP 2009159663 A